# EUROPÄISCHE PATENTSCHRIFT

(11) **EP 3 497 146 B1**
(45) Veröffentlichungstag und Bekanntmachung des Hinweises auf die Patenterteilung: **31.08.2022**
(21) Anmeldenummer: 17749466.3
(22) Anmeldetag: 08.08.2017
(51) Int. Cl.: C08G 18/71, C08G 18/22, C08G 18/24, C08G 18/62, C08G 18/40, C08G 18/42, C08G 18/68, C08G 18/79, C09D 175/14, C09D 175/04, C09J 175/04, C09J 175/14, C08G 18/28, C08G 18/73, C08G 18/75

(54) **SILANFUNKTIONELLE POLYMERE POLYURETHANE**
SILANE-FUNCTIONAL POLYMERIC POLYURETHANES
POLYURÉTHANES POLYMÈRES À FONCTION SILANE

(30) Priorität: 09.08.2016 EP 16183429
(43) Veröffentlichungstag der Anmeldung: 19.06.2019
(73) Patentinhaber: Covestro Intellectual Property GmbH & Co. KG, 51373 Leverkusen (DE)
(72) Erfinder: LAAS, Hans-Josef, 51519 Odenthal (DE)
(74) Vertreter: Levpat
(86) Internationale Anmeldenummer: PCT/EP2017/070078
(87) Internationale Veröffentlichungsnummer: WO 2018/029197

(56) Entgegenhaltungen:
- EP-A1- 1 995 261
- EP-A1- 2 660 259
- WO-A1-2014/037265
- WO-A1-2015/113923
- DE-A1-102010 015 683

## Beschreibung

Die Erfindung betrifft ein Verfahren zur Herstellung von Silangruppen enthaltenden Polyurethanen, die nach diesem Verfahren erhältlichen Silangruppen enthaltenden Polyurethane, deren Verwendung als Bindemittel in vernetzbaren Lack-, Dichtstoff- oder Klebstoffrohstoffen, sowie die die erfindungsgemäßen Silangruppen enthaltenden Polyurethane aufweisenden vernetzbaren Bindemittel.

Silanfunktionelle Polyurethane sind als Bindemittel für Klebstoffe, Dichtstoffe oder Beschichtungen lange bekannt und vielfach beschrieben. Die Herstellung Silangruppen tragender Polyurethane kann auf verschiedene Weise erfolgen, beispielsweise durch Reaktion von Polyisocyanaten bzw. isocyanatfunktionellen Prepolymeren mit gegenüber Isocyanatgruppen reaktiven Silanverbindungen, wie z. B. sekundäre Aminoalkylsilanen oder Mercaptoalkylsilanen.

Eine Methode, die häufig bevorzugt wird, da sie zu silanfunktionellen Polyurethanen besonders niedriger Viskosität führt, besteht darin, hydroxyfunktionelle Verbindungen, wie z. B. Polyether-, Polyurethan- oder Polyesterpolyole, mit Isocyanatoorganosilanen, beispielsweise den in der US 3,494,951 oder EP-A 0 649 850 beschriebenen Isocyanatoalkylalkoxysilanen, umzusetzen. Unter Verwendung solcher Isocyanatoalkylsilane lassen sich beispielsweise aus hydroxyfunktionellen Polyurethanprepoylmeren bzw. Polyetherpolyolen niedrigviskose Silan-terminierte Polyurethanprepolymere herstellen, die als Bindemittel für feuchtigkeitsvernetzende Kleb- und Dichtstoffe dienen können (siehe z. B. EP-A 0 070 475 und EP-A 0 372 561). Die EP 2 660 259 A1 betrifft Carbodiimid-haltige Zusammensetzungen für die Herstellung aminisch vernetzter Polyesterurethanelastomere.

Die Umsetzung von Isocyanatopropyltrimethoxysilan oder Isocyanatopropyltriethoxysilan mit Polyolen führt nach der Lehre der WO 2009/115079 zu Alkoxysilangruppen enthaltenden Polyurethanen, die sich in Gegenwart geeigneter Katalysatoren auch unter Wasserausschluss thermisch aushärten lassen und beispielsweise die Formulierung von Fahrzeuglacken sehr hoher Kratzbeständigkeit ermöglichen. Ein Ausführungsbeispiel beschreibt konkret die Reaktion einer Polyolmischung, bestehend aus zwei Polyacrylatpolyolen und dem niedermolekularen 1,6-Hexandiol, mit einem HDI-Biuret und Isocyanatopropyltrimethoxysilan.

Addukte aus Isocyanatoalkylalkoxysilanen, wie z. B. Isocyanatopropyltrimethoxysilan, und niedermolekularen, bis zu 20 C-Atome enthaltenden, verzweigten Diolen oder Polyolen, sowie ihre Verwendung als selbstvernetzende Bindemittel oder als Härter für hydroxyfunktionelle Bindemittel in 2K-Beschichtungssystemen sind Gegenstand der EP-A 2 641 925. Zusätzlich zu den niedermolekularen verzweigten Diolen oder Polyolen können bei der Herstellung der Addukte bis zu einem Anteil von 40 Gew.-% weitere Diole und/oder Polyole, darunter z. B. auch hydroxylgruppenhaltige Polyester oder Polyacrylate, mitverwendet werden.

Die WO 2013/189882 beschreibt Addukte von Isocyanatotrialkyoxysilanen und mehrwertigen Alkoholen, als zusätzliche Vernetzungsmittel in nicht wässrigen ZweikomponentenPolyurethanlacken (2K-PUR). Vorzugsweise handelt es sich bei den eingesetzten mehrwertigen Alkoholen um niedermolekulare verzweigte Diole und/oder Polyole, die bis zu einem Anteil von 40 Gew.-% auch hydroxylgruppenhaltige Polymere, wie z. B. Polyesterpolyole oder Polyacrylatpolyole enthalten können.

Die WO 2014/180623 beschreibt feuchtigkeitsvernetzende Beschichtungsmittel, die mindestens ein Addukt eines Isocyanatosilans an eine hydroxyfunktionelle Verbindung, einen Zinn-haltigen Katalysator sowie ein Aminosilan enthalten. Als geeignete hydroxyfunktionelle Verbindungen zur Herstellung der Addukte werden einwertige oder mehrwertige Alkohole sowie Polyole genannt, darunter in einer langen Aufzählung geeigneter polymerer Polyole auch hydroxyfunktionelle Polyacrylate. In den Ausführungsbeispielen dieser Veröffentlichung kommt mit Vestanat M 95 allerdings lediglich ein niedermolekulares 2:1-Addukt (molar) aus Isocyanatopropytrimethoxysilan und 1,9-Nonandiol zum Einsatz.

WO 2008/034409 beschreibt beispielhaft die teilweise Umsetzung eines handelsüblichen Polyesterpolyols Desmophen 1145 (Covestro Deutschland AG) mit einem Unterschuss an lsocyanatopropyltriethoxysilan. Aufgrund des gewählten Äquivalentverhältnisses werden dabei weniger als 15 % der im Polyol ursprünglich vorhandenen Hydroxylgruppen urethanisiert.

WO 2014/037265 beschreibt die Herstellung silanfunktioneller Bindemittel mit Thiourethanstruktur durch Umsetzung von Polyolen mit monomerarmen Diisocyanat/Mercaptosilan-Addukten. Die in den Beispielen genannten polymeren Polyacrylat-und Polyesterpolyole werden ausschließlich im Gemisch mit, bezogen auf die Hydroxyläquivalente, erheblichen Mengen eines niedermolekularen Diols umgesetzt.

Die vollständige Umsetzung sämtlicher Hydroxylgruppen polymerer Polyester- und/oder Polyacrylatpolyole mit Isocyanatoalkoxysilanen, bevorzugt ohne die Mitverwendung größerer Mengen niedermolekularer, niedrigfunktioneller Alkohole ist bisher nicht beschrieben. Wie eigene Versuche zeigten, kommt es bei ausschließlicher Verwendung polymerer Polyole unter üblichen Reaktionsbedingungen, beispielsweise bei Temperaturen oberhalb von 60°C, noch vor dem Ende der Urethanisierungsreaktion zum Gelieren des Reaktionsansatzes.

Aufgabe der vorliegenden Erfindung war es daher, ein neues Verfahren zur Herstellung Alkoxysilan-modifizierter Polyurethane zur Verfügung zu stellen, das es erlaubt polymere Polyole, wie z. B. Polyester- und/oder Polyacrylatpolyole, bevorzugt auch ohne Mitverwendung niedermolekularer Alkohole, sicher und reproduzierbar vollständig mit Isocyanatoalkoxysilanen umzusetzen. Die nach diesem Verfahren erhältlichen Produkte sollten sich für sämtliche Anwendungsgebiete silanfunktioneller Polyurethane, insbesondere als Bindemittel für feuchtigkeitsvernetzende oder thermisch härtbare Klebstoffe, Dichtstoffe oder Beschichtungen eignen.

Diese Aufgabe konnte durch das nachfolgend näher beschriebene erfindungsgemäße Verfahren gelöst werden. Das erfindungsgemäße Verfahren beruht auf der überraschenden Beobachtung, dass polymere Polyester- und/oder Polyacrylatpolyole, wie sie beispielsweise als Bindemittelkomponenten für 2K-PUR-Lacke kommerziell verfügbar sind, nach, bevorzugt vollständiger, chemischer Umsetzung der im Polymer enthaltenen Carboxylgruppen, bevorzugt auch in Abwesenheit niedermolekularer Alkohole, völlig problemlos mit Isocyanatosilanen, besonders bevorzugt vollständig, zu silanfunktionellen Polyurethanen reagieren.

Gegenstand der vorliegenden Erfindung ist ein Verfahren zur Herstellung von Silangruppen enthaltenden Polyurethanen, umfassend die Umsetzung von
A) mindestens einem polymeren Polyol mit einer nach DIN EN ISO 2114:2002-06 bestimmten Säurezahl von 0,01 bis 30,0 mg KOH/g, bezogen auf den Feststoffgehalt, mit
B) mindestens einer mindestens eine gegenüber Carboxylgruppen reaktive Gruppe aufweisenden Verbindung, die mindestens eine Epoxidgruppe, Carbodiimidgruppe und/oder 2-Oxazolingruppe enthält,
   unter Erhalt eines Reaktionsproduktes und die Umsetzung des Reaktionsproduktes mit
C) mindestens einem Alkoxysilan-funktionellen Isocyanat.

In einer ersten bevorzugten Ausführungsform ist das polymere Polyol A) ein mindestens difunktionelles polymeres Polyol mit einem zahlenmittleren Molekulargewicht Mₙ von 270 bis 22000 g/mol, bevorzugt von 500 bis 18000 g/mol, besonders bevorzugt von 800 bis 12000 g/mol. Ebenfalls bevorzugt, in Kombination mit den vorstehend genannten zahlenmittleren Molekulargewichten besonders bevorzugt, ist, dass das polymere Polyol A) mindestens ein difunktionelles Polyol ist und eine nach DIN EN ISO 2114:2002-06 bestimmte Säurezahl von 0,01 bis 30,0 mg KOH/g, bevorzugt 0,1 bis 25,0 mg KOH/g, besonders bevorzugt 0,2 bis 20,0 mg KOH/g, jeweils bezogen auf den Feststoffgehalt, aufweist.

Im vorliegenden Dokument werden unter "polymeren Polyolen" Moleküle mit mindestens zwei Hydroxylgruppen verstanden, die aus mehreren gleichartigen oder verschiedenen, wiederkehrenden Grundbausteinen aufgebaut sind, und die nach an sich bekannten Methoden der makromolekularen Chemie, beispielsweise durch Polymerisation, Polykondensation oder Polyaddition hergestellt werden können. Dabei soll der Begriff "polymere Polyole" auch sogenannte oligomere Polyole umfassen, die in der Regel aus nur wenigen, beispielsweise 3 bis 20, Grundbausteinen aufgebaut sind, wobei der Übergang von Oligomeren zu Polymeren mit niedrigem Molekulargewicht fließend ist.

Die im vorliegenden Dokument genannten zahlenmittleren Molekulargewichte Mₙ der polymeren Polyole A) wurden mittels Gelpermeationschromatographie (GPC) unter Verwendung eines Polystyrol-Standards und Tetrahydrofuran als Elutionsmittel entsprechend der DIN 55672-1:2016-03 bestimmt.

Bevorzugt bedeuten erfindungsgemäß die Ausdrücke "umfassend" oder "enthaltend", "im Wesentlichen bestehend aus" und besonders bevorzugt "bestehend aus".

Geeignete polymere Polyole A) für das erfindungsgemäße Verfahren sind insbesondere Polyesterpolyole, Polycarbonatpolyole und/oder Polyacrylatpolyole. Bevorzugt weisen diese Polyole eine mittlere OH-Funktionalität von 2 bis 6 und besonders bevorzugt eine mittlere Funktionalität von 2 bis 4 auf.

Geeignete Polyesterpolyole A) sind die beispielsweise solche der in der EP-A 0 978 523, Seite 5, Zeilen 17 bis 47 oder der EP-A 0 659 792, Seite 6, Zeilen 32 bis 45 genannten Art, sofern sie den oben gemachten Angaben hinsichtlich Funktionalität und Molekulargewicht entsprechen. Besonders bevorzugte Polyesterpolyole sind Kondensationsprodukte mehrwertiger Alkohole, wie z. B. 1,2-Ethandiol, 1,2-Propandiol, Diethylenglykol, 1,4-Butandiol, 1,6-Hexandiol, Neopentylglykol, 1,4-Cyclohexandimethanol, 1,4-Cyclohexandiol, Perhydrobisphenol, 1,1,1-Trimethylolpropan, 1,2,3-Propantriol, Pentaerythrit und/oder Sorbitol, mit unterschüssigen Mengen an mehrwertigen Carbonsäuren bzw. Carbonsäureanhydriden, wie z. B. Bernsteinsäure, Adipinsäure, Sebazinsäure, Dodecandisäure, Glutarsäureanhydrid, Maleinsäureanhydrid, Phthalsäureanhydrid, Isophthalsäure, Terephthalsäure, Trimellitsäure Hexahydrophthalsäureanhydrid und/oder Tetrahydrophthalsäureanhydrid, oder solche, wie sie in an sich bekannter Weise aus Lactonen, wie z. B. ε-Caprolacton, und einfachen mehrwertigen Alkoholen, wie z. B. den oben beispielhaft genannten, als Startermolekülen unter Ringöffnung erhältlich sind.

Geeignete Polycarbonatpolyole A) sind insbesondere die an sich bekannten Umsetzungsprodukte zweiwertiger Alkohole, beispielsweise solcher, wie sie oben in der Liste der mehrwertigen Alkohole beispielhaft genannt sind, mit Diarylcarbonaten, wie z. B. Diphenylcarbonat, Dimethylcarbonat oder Phosgen. Geeignete Polycarbonatpolyole A) sind auch solche, die neben Carbonatstrukturen zusätzlich Estergruppen enthalten. Hierbei handelt es sich insbesondere um die an sich bekannten Polyestercarbonatdiole, wie sie beispielsweise gemäß der Lehre der DE-AS 1 770 245 durch Umsetzung zweiwertiger Alkohole mit Lactonen, wie insbesondere ε-Caprolacton, und anschließende Reaktion der dabei entstehenden Polyesterdiole mit Diphenyl- oder Dimethylcarbonat erhalten werden können. Ebenfalls geeignete Polycarbonatpolyole A) sind solche, die neben Carbonatstrukturen zusätzlich Ethergruppen enthalten. Hierbei handelt es sich insbesondere um die an sich bekannten Polyethercarbonatpolyole, wie sie beispielsweise nach dem Verfahren der EP-A 2 046 861 durch katalytische Umsetzung von Alkylenoxiden (Epoxiden) und Kohlendioxid in Anwesenheit von H-funktionellen Startersubstanzen erhältlich sind.

Geeignete Polyacrylatpolyole A) sind beispielsweise solche der in WO 2011/124710 Seite 10, Zeile 32 bis Seite 13, Zeile 18 genannten Art, sofern sie den oben gemachten Angaben hinsichtlich Funktionalität und Molekulargewicht entsprechen. Besonders bevorzugte Polyacrylatpolyole A) sind Polymerisate bzw. Copolymerisate von Hydroxyalkylestern der Acrylsäure oder Methacrylsäure, wie z. B. Hydroxyethylacrylat, Hydroxypropylacrylat, Hydroxybutylacrylat Hydroxyethylmethacrylat, Hydroxypropylmethacrylat oder Hydroxybutylmethacrylat, gegebenenfalls gemeinsam mit Acrylsäurealkylestern und/oder Methacrylsäurealkylestern, wie z. B. Methylacrylat, Ethylacrylat, n-Butylacrylat, iso-Butylacrylat, 2-Ethylhexylacrylat, Cyclohexylacrylat, Isobornylacrylat, Laurylacrylat, Methylmethacrylat, Ethylmethacrylat, n-Butylmethacrylat, iso-Butylmethacrylat, 2-Ethylhexylmethacrylat, Cyclohexylmethacrylat, Isobornylmethacrylat, Laurylmethacrylat, Styrol oder anderen copolymerisierbaren olefinisch ungesättigten Monomeren, wie z. B. Acrylsäure, Methacrylsäure oder Maleinsäuredimethylester.

Geeignete Polyole A) sind beispielsweise auch die bekannten, durch Umsetzung einfacher Glykole, wie z. B. Diethylenglykol, Triethylenglykol, 4,4'-Di((2-hydroxyethoxy)phenyl)-dimethylmethan (Addukt von 2 mol Ethylenoxid an Bisphenol A) oder Hexandiol, mit Formaldehyd erhältlichen Polyacetalpolyole oder auch durch Polykondensation cyclischer Acetale, wie z. B. Trioxan, hergestellte Polyacetale.

Weitere geeignete Polyole A) sind beispielsweise auch die in EP-A 0 689 556 und EP-A 0 937 110 beschriebenen, z. B. durch Umsetzung epoxidierter Fettsäureester mit aliphatischen oder aromatischen Polyolen unter Epoxidringöffung erhältlichen speziellen Polyole.

Hydroxylgruppen enthaltende Polybutadiene können ebenfalls als Polyole A) dienen.

Die polymeren Polyole A) kommen beim erfindungsgemäßen Verfahren einzeln oder in Form beliebiger Mischungen untereinander zum Einsatz. Sie können sowohl in lösemittelfreier Form als auch in üblichen Lösemitteln gelöst vorliegen.

Geeignete Lösemittel sind insbesondere solche, die sich gegenüber den reaktiven Gruppen der Alkoxysilan-funktionellen Isocyanate C) inert verhalten, beispielsweise die bekannten üblichen aprotischen Lacklösemittel, wie z. B. Ethylacetat, Butylacetat, Ethylenglykolmonomethyl- oder - ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®} (Deutsche EXXON CHEMICAL GmbH, Köln, DE) und Shellsol^{®} (Deutsche Shell Chemie GmbH, Eschborn, DE) im Handel sind, aber auch Lösemittel wie Propylenglykoldiacetat, Diethylenglykoldimethylether, Dipropylenglykoldimethylether, Diethylenglykolethyl- und - butyletheracetat, Ethylethoxypropionat, Propylencarbonat, N-Methylpyrrolidon und N-Methylcaprolactam, oder beliebige Gemische solcher Lösemittel.

Bei den beim erfindungsgemäßen Verfahren eingesetzten Komponenten B) handelt es sich um beliebige, mindestens eine gegenüber Carboxylgruppen reaktive Gruppe aufweisende Verbindungen, die mindestens eine Epoxidgruppe, Carbodiimidgruppe und/oder 2-Oxazolingruppe enthalten und die vorzugsweise ein zahlenmittleres Molekulargewicht von 44 bis 2000, bevorzugt von 128 bis 1500 und besonders bevorzugt von 250 bis 1000 aufweisen, beispielsweise solche, wie sie in der Lacktechnologie als Säurefänger allgemein bekannt sind.

Gemäß einer weiteren bevorzugten Ausführungsform enthält die mindestens eine gegenüber Carboxylgruppen reaktive Gruppe aufweisende Verbindung B) eine bis drei, besonders bevorzugt eine oder zwei und ganz besonders bevorzugt genau eine Epoxidgruppe, Carbodiimidgruppe und/oder 2-Oxazolingruppe.

Geeignete Epoxidgruppen enthaltende Verbindungen B) sind beispielsweise 1,2-Epoxyethan, 1,2-Epoxypropan, 1,2-Epoxybutan, 1,2-Epoxyhexan, 1,2-Epoxyheptan, 1,2-Epoxydecan, 1,2-Epoxydodecan, 1,2-Epoxytetradecan, 1,2-Epoxyhexadecan, 1,2-Epoxyoctadecan, 1,2-Epoxycyclopentan, 1-Methyl-1,2-epoxycyclopentan, 1,2-Epoxycyclohexan, 1,2-Epoxycycloheptan, 1,2-Epoxycyclooctan, Isophoronoxid, Styroloxid, (2,3-Epoxypropyl)benzol, *trans*-Stilbenoxid, 3-Glycidoxypropyltrimethoxysilan, 3 -Glycidoxypropyltriethoxysilan, 3 -Glycidoxypropylmethyldiethoxysilan, 2-(3,4-Epoxycyclohexyl)ethyltrimethoxysilan, 2-(3,4-Epoxycyclohexyl)-ethyltriethoxysilan, 1,2,7,8-Diepoxyoctan, 1,2,5,6-Diepoxycyclooctan, Butylglycidylether, 2-Ethylhexylglycidylether, Versaticsäureglycidylester, Hexahydrophthalsäurediglycidylester, Bisphenol-A-diglycidylether (BADGE), Glyceringlycidether und Triglycidylisocyanurat (TGIC).

Geeignete Carbodiimidgruppen enthaltende Verbindungen B) sind grundsätzlich beliebige monomere oder polymere Carbodiimide, wie sie sich beispielsweise in an sich bekannter Weise durch katalysierte thermische Polykondensation aus aliphatischen, cycloaliphatischen, araliphatischen und/oder aromatischen Mono- und/oder Diisocyanaten erhalten lassen.

Hierbei handelt es sich beispielsweise um cycloaliphatische Carbodiimide, wie z. B. Dicyclohexylcarbodiimid oder die in DE 2 301 725, DE 2 358 038 und EP 0 890 604 beschriebenen Carbodiimide auf Basis von 1-Isocyanato-3,3,5-trimethyl-5-isocyanatomethylcyclohexan (Isophorondiisocyanat; IPDI), 2,4'- und 4,4'-Diisocyanatodicyclohexylmethan und/oder Cyclohexylisocyanat, um Carbodiimide aus tertiär gebundenen Isocyanatgruppen, wie z. B. die in US 4 419 294 beschriebenen Carbodiimide auf Basis von 1,3-Bis(1-isocyanato-1-methylethyl)-benzol (TMXDI) und 1-Isocyanato-4-(1-isocyanato-1-methylethyl)-1-methyl-cyclohexan, um aromatische Carbodiimide, wie z. B. solche auf Basis von 2,4- und 2,6-Tolylendiisocyanat, 2,4'- und 4,4'-Diphenylmethandiisocyanat, 1,3- und 1,4-Phenylendiisocyanat, und insbesondere um solche auf Basis von aromatischen Isocyanaten, die jeweils in mindestens einer o-Stellung zur Isocyanatgruppe einen aliphatischen Substituenten mit 1 bis 6 Kohlenstoffatomen, vorzugsweise einen Isopropylrest, tragen, wie z. B. o-Tolylisocyanat, 2,6-Diisopropylphenylisocyanat und/oder 1,3,5-Triisopropylbenzol-2,4-diisocyanat.

Geeignete Oxazolingruppen enthaltende Verbindungen B) sind beispielsweise 2-Methyl-2-oxazolin, 2-Hydroxyethyl-2-oxazolin, 2-Hydroxypropyl-2-oxazolin, 5-Hydroxypentyl-2-oxazolin und/oder 1,3-Phenylenbis-2-oxazolin.

Besonders bevorzugte gegenüber Carboxylgruppen reaktive Gruppe aufweisende Verbindungen B) sind Mono- und Polycarbodiimide auf Basis von 2,6-Diisopropylphenylisocyanat und/oder 1,3,5-Triisopropylbenzol-2,4-diisocyanat, wie sie beispielsweise unter dem Handelsnamen Stabaxol^{®} von der Firma Rheinchemie Rheinau GmbH (Deutschland) kommerziell vertrieben werden. Ganz besonders bevorzugt ist die Verwendung von Di-(2,6-di-isopropylphenyl)-carbodiimid (Stabaxol^{®} I).

Die gegenüber Carboxylgruppen reaktive Gruppen aufweisenden Verbindungen B) können beim erfindungsgemäßen Verfahren sowohl als Einzelkomponenten als auch in Form beliebiger Gemische untereinander eingesetzt werden. In Abhängigkeit von der Art des eingesetzten Polyols A) und der gegenüber Carboxylgruppen reaktive Gruppen aufweisenden Verbindungen B) kann auch bereits die Umsetzung mit einer molar unterschüssigen Menge an gegenüber Carboxylgruppen reaktiven Gruppen ausreichen, um die erfindungsgemäße stabilisierende Wirkung zu erzielen. Gemäß einer weiteren bevorzugten Ausführungsform erfolgt die Umsetzung des polymeren Polyols A) mit der mindestens eine gegenüber Carboxylgruppen reaktive Gruppe aufweisenden Verbindung B) jedoch unter Einhaltung eines Äquivalentverhältnisses von Carboxylgruppen zu gegenüber Carboxylgruppen reaktiven Gruppen von 1,5 : 1 bis 1 : 5, bevorzugt 1,2 : 1 bis 1 : 2 und besonders bevorzugt 1,1 : 1 bis 1 : 1,1 erfolgt.

Ganz besonders bevorzugt erfolgt die Dosierung der Verbindung B) dabei in einer solchen Menge, dass auf jede Carboxylgruppe des polymeren Polyols A) mindestens eine gegenüber Carboxylgruppen reaktive Gruppe entfällt.

Beim erfindungsgemäßen Verfahren wird nach der Umsetzung, vorzugsweise im Anschluss an die Umsetzung des polymeren Polyols A) mit einer gegenüber Carboxylgruppen reaktiven Verbindung B) das erhaltene Reaktionsprodukt in einem weiteren Verfahrensschritt mit mindestens einem Alkoxysilan-funktionellen Isocyanat C) umgesetzt. Das aus der Umsetzung von A) mit B) erhaltene Reaktionsprodukt kann gegebenenfalls vor der Umsetzung mit C) noch weiteren beliebigen Zwischenschritten unterzogen werden, sofern bei der Umsetzung mit dem mindestens einen Alkoxysilan-funktionellen Isocyanat C) noch eine ausreichende Menge an Hydroxylgruppen im Reaktionsprodukt vorhanden ist. Besonders bevorzugt findet die Umsetzung des Reaktionsproduktes mit dem Alkoxysilan-funktionellen Isocyanat C) jedoch ohne Zwischenschritte statt.

Bei den Alkoxysilan-funktionellen Isocyanaten C) handelt es sich um beliebige Verbindungen, in denen gleichzeitig nebeneinander mindestens eine, vorzugsweise genau eine, Isocyanatgruppe und mindestens eine, vorzugsweise genau eine, Silangruppe mit mindestens einem Alkoxysubstituenten vorliegen. Im Folgenden wird das Alkoxysilan-funktionelle Isocyanat C) auch als Isocyanatoalkoxysilan C) bezeichnet.

Geeignete Isocyanatoalkoxysilane C) sind beispielsweise Isocyanatoalkylalkoxysilane, wie sie z. B. nach den in US 3 494 951, EP-A 0 649 850, WO 2014/063895 und WO 2016/010900 beschriebenen Verfahren auf phosgenfreiem Weg durch thermische Spaltung der korrespondierenden Carbamate oder Harnstoffe zugänglich sind.

Gemäß einer weiteren bevorzugten Ausführungsform kommt als Alkoxysilan-funktionelles Isocyanat C) mindestens eine Verbindung der allgemeinen Formel (I) 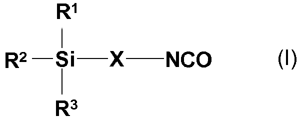 zum Einsatz, in welcher
- R¹, R² und R³: unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 18 Kohlenstoffatomen, die gegebenenfalls bis zu 3 Heteroatome aus der Reihe Sauerstoff, Schwefel, Stickstoff enthalten können, vorzugsweise jeweils Alkylreste mit bis zu 6 Kohlenstoffatomen und/oder Alkoxyreste mit bis zu 6 Kohlenstoffatomen, die bis zu 3 Sauerstoffatome enthalten können, besonders bevorzugt jeweils Methyl, Methoxy und/oder Ethoxy bedeuten, mit der Maßgabe, dass mindestens einer der Reste R¹, R² und R³ über ein Sauerstoffatom mit dem Siliziumatom verbunden ist, und
- X: für einen linearen oder verzweigten organischen Rest mit bis zu 6, vorzugsweise 1 bis 4 Kohlenstoffatomen, besonders bevorzugt für einen Propylenrest (-CH2-CH2-CH2-) steht.

Beispiele für derartige Isocyanatoalkoxysilane sind Isocyanatomethyltrimethoxysilan, Isocyanatomcthyltricthoxysilan, Isocyanatomcthyltriisopropoxysilan, 2-Isocyanatocthyl-trimcthoxysilan, 2-Isocyanatoethyltriethoxysilan, 2-Isocyanatoethyltriisopropoxysilan, 3 -Isocyanatopropyltrimethoxysilan, 3-Isocyanatopropyltriethoxysilan, 3-Isocyanatopropylmethyl-dimethoxysilan, 3-Isocyanatopropylmethyldiethoxysilan, 3-Isocyanatopropylethyldiethoxysilan, 3-Isocyanatopropyldimethylethoxysilan, 3-Isocyanatopropyldiisopropylethoxysilan, 3 -Isocyanatopropyltripropoxysilan, 3-Isocyanatopropyltriisopropoxysilan, 3-Isocyanatopropyl-tributoxysilan, 3-Isocyanatopropylmethyldibutoxysilan, 3-Isocyanatopropylphenyldimethoxysilan, 3-Isocyanatopropylphenyldiethoxysilan, 3-Isocyanatopropyltris(methoxyethoxyethoxy)silan, 2-Isocyanatoisopropyltrimethoxysilan, 4-Isocyanatobutyltrimethoxysilan, 4-Isocyanatobutyl-triethoxysilan, 4-Isocyanatobutyltriisopropoxysilane, 4-Isocyanatobutylmethyldimethoxysilan, 4-Isocyanatobutylmethyldiethoxysilan, 4-Isocyanatobutylethyldimethoxysilan, 4-Isocyanatobutyl-ethyldiethoxysilan, 4-Isocyanatobutyldimethylmethoxysilan, 4-Isocyanatobutylphenyldimethoxy-silan, 4-Isocyanatobutylphenyldiethoxysilan, 4-Isocyanato(3-methylbutyl)trimethoxysilan, 4-Isocyanato(3-methylbutyl)triethoxysilan, 4-Isocyanato(3-methylbutyl)methyldimethoxysilan, 4-Isocyanato(3-methylbutyl)methyldiethoxysilan und 11-Isocyanatoundecyltrimethoxysilan oder beliebige Gemische solcher Isocyanatoalkoxysilane.

Geeignete Isocyanatoalkoxysilane C) sind beispielsweise auch Isocyanatosilane mit Thiourethanstruktur, wie sie nach dem Verfahren der WO 2014/037279 durch Umsetzung beliebiger aliphatischer, cycloaliphatischer, araliphatischer oder aromatischer Diisocyanate mit beliebigen Mercaptosilanen in einem NCO : SH-Verhältnis von 6 : 1 bis 40 : 1 und anschließende Abtrennung überschüssiger, nicht umgesetzter monomerer Diisocyanate durch Dünnschichtdestillation erhalten werden können.

Gemäß einer weiteren bevorzugten Ausführungsform kommt als Isocyanatoalkoxysilan C) mindestens eine Verbindung der allgemeinen Formel (II) zum Einsatz 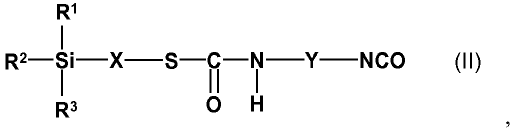 die im Gemisch mit untergeordneten Mengen silanfunktioneller Verbindungen der allgemeinen Formel (III) 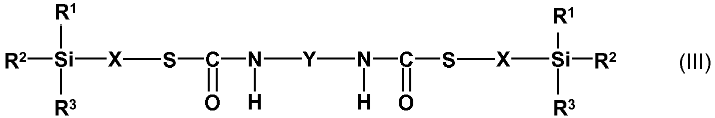 vorliegen, wobei in den Formeln (II) und (III)
- R¹, R² und R³: unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 18 Kohlenstoffatomen, die gegebenenfalls bis zu 3 Heteroatome aus der Reihe Sauerstoff, Schwefel, Stickstoff enthalten können, vorzugsweise jeweils Alkylreste mit bis zu 6 Kohlenstoffatomen und/oder Alkoxyreste mit bis zu 6 Kohlenstoffatomen, die bis zu 3 Sauerstoffatome enthalten können, besonders bevorzugt jeweils Methyl, Methoxy und/oder Ethoxy bedeuten, mit der Maßgabe, dass mindestens einer der Reste R¹, R² und R³ über ein Sauerstoffatom mit dem Siliziumatom verbunden ist,
- X: für einen linearen oder verzweigten organischen Rest mit bis zu 6, vorzugsweise 1 bis 4 Kohlenstoffatomen, besonders bevorzugt für einen Propylenrest (-CH2-CH2-CH2-) steht und
- Y: für einen linearen oder verzweigten, aliphatischen oder cycloaliphatischen Rest mit 4 bis 18 Kohlenstoffatomen oder einen gegebenenfalls substituierten aromatischen oder araliphatischen Rest mit 6 bis 18 Kohlenstoffatomen, bevorzugt für einen linearen oder verzweigten, aliphatischen oder cycloaliphatischen Rest mit 6 bis 13 Kohlenstoffatomen, steht und
wobei die Verbindungen der allgemeinen Formel (III) vorzugsweise einen Anteil von 2 bis 15 Gew.-%, besonders bevorzugt 2 bis 10 Gew.-% an der Gesamtmasse der Verbindungen der allgemeinen Formeln (II) und (III) ausmachen.

Besonders bevorzugte Beispiele für solche Isocyanatosilane mit Thiourethanstruktur sind die Umsetzungsprodukte von 2-Mercaptoethyltrimethylsilan, 2-Mercaptoethylmethyldimethoxysilan, 2-Mercaptoethyltrimethoxysilan, 2-Mercaptoethyltriethoxysilan, 3 -Mercaptopropylmethyldimethoxysilan, 3-Mercaptopropyldimethylmethoxysilan, 3-Mercaptopropyltrimethoxysilan, 3-Mercaptopropylmethyldiethoxysilan, 3 -Mercaptopropyltriethoxysilan, 3 -Mercaptopropylethyldimethoxysilan, 3-Mercaptopropylethyldiethoxysilan und/oder 4-Mercaptobutyltrimethoxysilan mit 1,5-Diisocyanatopentan, 1,6-Diisocyanatohexan, 1-Isocyanato-3,3,5-trimethyl-5-isocyanatomethylcyclohexan, 2,4'- und/oder 4,4'-Diisocyanatodicyclohexylmethan oder beliebigen Gemischen dieser Diisocyanate.

Ebenfalls geeignete Isocyanatoalkoxysilane C) sind beispielsweise auch solche mit Formylharnstoffstruktur, wie sie nach dem Verfahren der WO 2015/113923 durch Umsetzung Formamidgruppen enthaltender Silane mit molar überschüssigen Mengen beliebiger aliphatischer, cycloaliphatischer, araliphatischer oder aromatischer Diisocyanate und anschließende destillative Abtrennung nicht umgesetzter monomerer Diisocyanate erhalten werden können.

Gemäß einer weiteren bevorzugten Ausführungsform kommt als Isocyanatoalkoxysilan C) mindestens eine Verbindung der allgemeinen Formel (IV) zum Einsatz 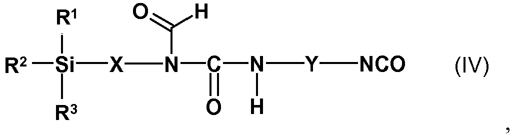 die im Gemisch mit untergeordneten Mengen silanfunktioneller Verbindungen der allgemeinen Formel (V) 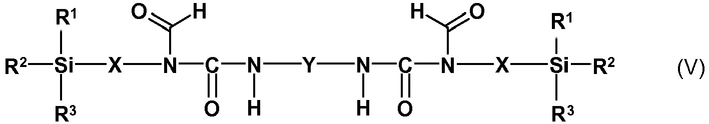 vorliegen, wobei in den Formeln (IV) und (V)
- R¹, R² und R³: unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 18 Kohlenstoffatomen, die gegebenenfalls bis zu 3 Heteroatome aus der Reihe Sauerstoff, Schwefel, Stickstoff enthalten können, vorzugsweise jeweils Alkylreste mit bis zu 6 Kohlenstoffatomen und/oder Alkoxyreste mit bis zu 6 Kohlenstoffatomen, die bis zu 3 Sauerstoffatome enthalten können, besonders bevorzugt jeweils Methyl, Methoxy und/oder Ethoxy bedeuten, mit der Maßgabe, dass mindestens einer der Reste R¹, R² und R³ über ein Sauerstoffatom mit dem Siliziumatom verbunden ist,
- X: für einen linearen oder verzweigten organischen Rest mit bis zu 6, vorzugsweise 1 bis 4 Kohlenstoffatomen, besonders bevorzugt für einen Propylenrest (-CH2-CH2-CH2-) steht und
- Y: für einen linearen oder verzweigten, aliphatischen oder cycloaliphatischen Rest mit 4 bis 18 Kohlenstoffatomen oder einen gegebenenfalls substituierten aromatischen oder araliphatischen Rest mit 6 bis 18 Kohlenstoffatomen, bevorzugt für einen linearen oder verzweigten, aliphatischen oder cycloaliphatischen Rest mit 6 bis 13 Kohlenstoffatomen, steht und
wobei die Verbindungen der allgemeinen Formel (V) vorzugsweise einen Anteil von 2 bis 15 Gew.-%, besonders bevorzugt 2 bis 10 Gew.-% an der Gesamtmasse der Verbindungen der allgemeinen Formeln (IV) und (V) ausmachen.

Beispiele für solche Isocyanatosilane mit Formylharnstoffstruktur sind die Umsetzungsprodukte von Formamidsilanen, wie sie sich beispielsweise nach dem in WO 2015/113923 offenbarten Verfahren durch Umsetzung primäre Aminogruppen tragender Aminosilane, insbesondere 3-Aminopropyltrimethoxysilan und/oder 3-Aminopropyltriethoxysilan, mit Ameisensäurealkylestern, bevorzugt mit Methylformiat und/oder Ethylformiat, unter Alkohoabspaltung erhalten lassen, mit aliphatischen und/oder cycloaliphatischen Diisocyanaten, bevorzugt 1,5-Diisocyanatopentan, 1,6-Diisocyanatohexan, 1-Isocyanato-3,3,5-trimethyl-5-isocyanatomethylcyclohexan, 2,4'- und/oder 4,4'-Diisocyanatodicyclohexylmethan oder beliebigen Gemischen dieser Diisocyanate.

Weitere geeignete Isocyanatoalkoxysilane C) sind auch die beispielsweise nach dem Verfahren der EP-A 1 136 495 hergestellten 1 : 1-Monoaddukte aus Diisocyanaten und speziellen sekundären Aminoalkylalkoxysilanen, den aus der EP-A 0 596 360 bekannten, durch Umsetzung von Maleinsäuredialkylestern mit Aminosilanen erhältlichen Asparaginsäureestern, bei dem die Reaktionspartner unter Verwendung eines großen molaren Isocyanatüberschusses miteinander umgesetzt und im Anschluss die nicht umgesetzten monomeren Diisocyanate destillativ abgetrennt werden.

Bevorzugte Alkoxysilan-funktionelle Isocyanate C) für das erfindungsgemäße Verfahren sind Isocyanatomethyltrimethoxysilan, Isocyanatomethyltriethoxysilan, 3-Isocyanatopropyltrimethoxysilan und 3-Isocyanatopropyltriethoxysilan, die nach dem Verfahren der WO 2014/037279 durch Umsetzung von 3-Mercaptopropyltrimethoxysilan und/oder 3-Mercaptopropyltriethoxysilan mit 1,5-Diisocyanatopentan, 1,6-Diisocyanatohexan, 1-Isocyanato-3,3,5-trimethyl-5-isocyanatomethylcyclohexan, 2,4'- und/oder 4,4'-Diisocyanatodicyclohexylmethan erhältlichen Isocyanatosilane mit Thiourethanstruktur sowie beliebige Gemische solcher Isocyanatosilane.

Besonders bevorzugt ist die Verwendung der genannten Isocyanatosilane mit Thiourethanstruktur.

Zur Durchführung des erfindungsgemäßen Verfahrens wird das mindestens eine polymere Polyol A) in einem ersten Verfahrensschritt mit mindestens einer gegenüber den Carboxylgruppen des Polyols A) reaktiven Verbindung B) umgesetzt. Diese Umsetzung findet vorzugsweise bei Temperaturen von 20 bis 200°C, bevorzugt von 30 bis 120°C und besonders bevorzugt von 40 bis 100°C, jeweils gegebenenfalls in Gegenwart mindestens eines der vorstehend genannten aprotischen Lösemittel sowie jeweils bevorzugt unter Einhaltung des vorstehend genannten Äquivalentverhältnisses von Carboxylgruppen zu gegenüber Carboxylgruppen reaktiven Gruppen statt. Die Umsetzung verläuft in Abhängigkeit von der Art der gewählten Reaktionspartner A) und B) und der gewählten Reaktionstemperatur unterschiedlich schnell und ist im Allgemeinen nach einer Zeit von 5 min bis 48 h, vorzugsweise nach 10 min bis 12 h, besonders bevorzugt nach 15 min bis 4 h beendet.

Das vorliegende Reaktionsprodukt aus polymerem Polyol A) und der gegenüber Carboxylgruppen reaktiven Verbindung B) wird in einem weiteren Schritt mit mindestens einem Alkoxysilan-funktionellen Isocyanat C) umgesetzt. Diese Umsetzung zu Silangruppen enthaltenden Polyurethanen findet vorzugsweise bei Temperaturen von 20 bis 200°C, bevorzugt von 40 bis 160°C und besonders bevorzugt von 60 bis 120°C, jeweils gegebenenfalls in Gegenwart mindestens eines der vorstehend genannten aprotischen Lösemittel statt. Hierbei und allgemein als weitere bevorzugte Ausführungsform erfolgt die Umsetzung der Hydroxylgruppen des Reaktionsproduktes mit dem Alkoxysilan-funktionellen Isocyanat C) unter Einhaltung eines Äquivalentverhältnisses von Isocyanatgruppen zu Hydroxylgruppen von 0,7 : 1 bis 1,5 : 1, bevorzugt von 0,8 : 1 bis 1,2 : 1, besonders bevorzugt von 0,9 : 1 bis 1,1 : 1 und ganz besonders bevorzugt von 1 : 1 bis 1,05 : 1.

Das erfindungsgemäße Verfahren kann unkatalysiert durchgeführt werden. Insbesondere zur Beschleunigung der Urethanisierungsreaktion können gegebenenfalls aber auch in der Isocyanatchemie übliche Katalysatoren mitverwendet werden. Beispielhaft seien hier genannt tertiäre Amine, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cocomorpholin, N-Cyclohexylmorpholin, N,N,N',N'-Tetramethylethylendiamin, N,N,N',N'-Tetramethy-1,3-butandiamin, N,N,N',N'-Tetramethyl-1,6-hexandiamin, Pentamethyldiethylentriamin, N-Methylpiperidin, N-Dimethylaminoethylpiperidin, N,N'-**Dimethylpiperazin,** N-Methyl-N'-dimethylaminopiperazin, 1,2-Dimethylimidazol, 2-Methylimidazol, N,N-Dimethylimidazol-β-phenylethylamin, 1,4-Diazabicyclo-(2,2,2)-octan (DABCO) und Bis-(N,N-dimethylaminoethyl)adipat, Amidine, wie z. B. 1,5-Diazabicyclo[4.3.0]nonen (DBN), 1,8-Diazabicyclo(5.4.0)undecen-7 (DBU) und 2,3-Dimethyl-3,4,5,6-tetrahydropyrimidin, Alkanolaminverbindungen, wie z. B. Triethanolamin, Triisopropanolamin, N-Methyldiethanolamin, N-Ethyldiethanolamin, Dimethylaminoethanol und 2-(N,N-Dimethylaminoethoxy)ethanol, N,N',N"-Tris-(dialkylaminoalkyl)hexahydrotriazine, wie z. B. N,N',N"-Tris-(dimethylaminopropyl)-s-hexahydrotriazin, Bis(dimethylaminoethyl)ether sowie Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Wismut(III)- Wismut(III)-2-ethylhexanoat, Wismut(III)-octoat, Wismut(III)-neodecanoat, Ytterbium(lll)-heptadionat, Ytterbium(lll)-acetylacetonat und Ytterbium(lll)-chlorid, Zinkchlorid, Zink-2-ethylcaproat, Zinn(II)-octoat, Zinn(II)-ethylcaproat, Zinn(II)-palmitat, Dibutylzinn(IV)-dilaurat (DBTL), Dibutylzinn(IV)-dichlorid oder Bleioctoat.

Bevorzugte einzusetzende Katalysatoren sind Wismuth- und Zinnverbindungen der genannten Art. Besonders bevorzugte Katalysatoren sind Wismut(III)-2-ethylhexanoat sowie Dibutylzinn(IV)-dilaurat (DBTL).

Diese Katalysatoren können beim erfindungsgemäßen Verfahren einzeln oder in Form beliebiger Mischungen untereinander eingesetzt werden und kommen dabei, falls überhaupt, in Mengen von 0,001 bis 1,0 Gew.-%, bevorzugt 0,01 bis 0,5 Gew.-%, berechnet als Gesamtgewicht an eingesetzten Katalysatoren bezogen auf das Gesamtgewicht der Reaktionspartner A), B) und C), zum Einsatz.

Um ein vorzeitige Vernetzung der Silangruppen während des erfindungsgemäßen Verfahrens zu unterbinden, kann der Zusatz von Wasserfängern, beispielsweise Orthoameisenestern, wie z. B. Triethylorthoformiat, oder Vinylsilanen, wie z. B. Vinyltrimethoxysilan, vorteilhaft sein. Diese Wasserfänger kommen, falls überhaupt, in Mengen von bis zu 5 Gew.-%, vorzugsweise bis zu 2 Gew.-%, berechnet als Gesamtgewicht an eingesetzten Wasserfängern bezogen auf das Gesamtgewicht der Reaktionspartner A), B) und C) zum Einsatz.

In einer bevorzugten Ausführungsform des erfindungsgemäßen Verfahrens wird das Alkoxysilan-funktionelle Isocyanat C) gegebenenfalls unter Inertgas, wie beispielsweise Stickstoff, und gegebenenfalls in Gegenwart eines geeigneten Lösungsmittels der genannten Art bei einer Temperatur zwischen 20 und 100°C vorgelegt. Anschließend wird das Reaktionsprodukt aus einem polymeren Polyol A) oder einer Mischung polymerer Polyole A) mit einer oder mehreren gegenüber Carboxylgruppen reaktiven Verbindungen B) gegebenenfalls gemeinsam mit weiterem Lösungsmittel in beliebiger Reihenfolge nacheinander oder im Gemisch im oben angegebenen Äquivalentverhältnis von Isocyanatgruppen zu Hydroxylgruppen zugegeben und die Reaktionstemperatur für die Urethanisierung gegebenenfalls durch eine geeignete Maßnahme (Heizen oder Kühlen) auf eine Temperatur von 40 bis 160°C eingestellt. Bei Mitverwendung von Katalysatoren und/oder Wasserfängern können diese dem Alkoxysilan-funktionellen Isocyanat C) und/oder dem Reaktionsprodukt aus A) und B) bereits vor Beginn der eigentlichen Urethanisierung zugesetzt werden. Es ist aber auch möglich, diese Hilfsmittel dem Reaktionsgemisch zu einem beliebigen Zeitpunkt während oder nach Beendigung der Urethanisierungsreaktion zuzusetzen. Zur Entfernung von Restfeuchtigkeit in der Polyolkomponente A) werden gegebenenfalls mitzuverwendende Wasserfänger dieser bevorzugt vor Beginn der eigentlichen Umsetzung zugesetzt.

Der Verlauf der Urethanisierungsreaktion kann beim erfindungsgemäßen Verfahren durch z. B. titrimetrische Bestimmung des NCO-Gehaltes nach DIN EN ISO 11909:2007-05 oder IR-spektroskopisch verfolgt werden. Im Anschluss an die Urethanisierungsreaktion, vorzugsweise nach vollständigem Umsatz von Isocyanat- und Hydroxylgruppen, erhält man als Produkte des erfindungsgemäßen Verfahrens die erfindungsgemäßen Silangruppen enthaltenden Polyurethane.

Ein weiterer Gegenstand der Erfindung sind Silangruppen enthaltende Polyurethane, hergestellt oder herstellbar nach dem erfindungsgemäßen Verfahren.

Die erfindungsgemäßen Silangruppen enthaltenden Polyurethane stellen wertvolle Bindemittel zur Herstellung von über Silanstrukturen vernetzbaren Lack-, Dichtstoff- oder Klebstoffrohstoffen dar.

Weitere Gegenstände der Erfindung sind die Verwendung der erfindungsgemäßen Silangruppen enthaltenden Polyurethane bei der Herstellung von vernetzbaren Bindemitteln, insbesondere für Lack-, Dichtstoff- oder Klebstoffrohstoffe, sowie die die erfindungsgemäßen Silangruppen enthaltenden Polyurethane enthaltenden vernetzbaren Bindemittel.

Die erfindungsgemäßen Silangruppen enthaltenden Polyurethane können als Bindemittel zur Herstellung von Lack-, Dichtstoff- oder Klebstoffrohstoffen entweder lösemittelfrei eingesetzt werden, lassen sich bei Bedarf aber auch mit üblichen Lösemitteln, beispielsweise den obengenannten, beim erfindungsgemäßen Verfahren gegebenenfalls mitzuverwendenden inerten Lacklösemitteln, trübungsfrei verdünnen.

Die Aushärtung der erfindungsgemäßen Silangruppen enthaltenden Polyurethane kann sowohl feuchtigkeitsvernetzend im Sinne einer Sol-Gel-Reaktion als auch thermisch, z. B. auch in Abwesenheit von Feuchtigkeit erfolgen.

Dabei können auch Katalysatoren mitverwendet werden, die die Hydrolyse und Kondensation von Alkoxysilangruppen oder die thermisch induzierte Kondensation beschleunigen.

Derartige Katalysatoren sind neben vorstehend genannten Urethanisierungskatalysatoren beispielsweise Säuren, wie z. B. organische Carbonsäuren, wie z. B. Essigsäure und Trifluoressigsäure, Schwefelsäure, p-Toluolsulfonsäure, Trifluormethansulfonsäure, Dodecylbenzolsulfonsäure, Phosphorsäure, Phosphorsäuremonoester und Phosphorsäurediester, wie z. B. Dibutylphosphat, Phosphorsäure-2-ethylhexylester, Phosphorsäurephenylester und Phosphorsäure-bis(2-ethylhexyl)ester, sowie Phosphonsäure, Phosphonsäurediester und Diphosphonsäurediester, wie sie z. B. in der WO 2007/033786 beschrieben sind.

Als Katalysatoren für die Silanvernetzung ebenfalls geeignet sind auch Basen, wie z. B. die N-substituierten Amidine 1,5-Diazabicyclo[4.3.0]non-5-en (DBN) und 1,5-Diazabicyclo[5.4.0]undec-7-en (DBU), oder auch Metallsalze und Metallchelate, wie z. B. Tetraisopropyltitanat, Tetrabutyltitanat, Titan(IV)acetylacetonat, Aluminium-tri-sec-butylat, Aluminiumacetylacetonat, Aluminiumtriflat, Zinntriflat oder Zirkonethylacetoacetat, wie sie z. B. in WO 2006/042658 beschrieben sind.

Geeignete Katalysatoren für die Silanvernetzung sind auch Phosphorsäure- und Phosphonsäureester der oben genannten Art, die in mit Aminen, vorzugsweise mit tertiären Aminen blockierter Form vorliegen. Besonders bevorzugte Katalysatoren dieses Typs sind solche, die im Temperaturbereich von 80 bis 150°C unter Abspaltung des Blockierungsamins die sauren Phosphorsäure- und Phosphonsäureester wieder freisetzen, die die eigentlich wirksame Katalysatoren darstellen. Geeignete aminblockierte Phosphorsäurekatalysatoren sind beispielsweise in WO 2008/074489 und WO 2009/077180 beschrieben.

Ebenfalls geeignete Katalysatoren für die Silanvernetzung sind organische Sulfonsäuren der oben genannten Art, die in blockierter Form, beispielsweise in amin-neutralisierter Form oder als Addukt an Epoxide, wie in der DE 2 356 768 B1 beschrieben, eingesetzt werden und oberhalb von beispielsweise 80°C die katalytisch aktiven Sulfonsäuren wieder freisetzen.

Weitere zur Vernetzung von Silangruppen geeignete Katalysatoren sind auch Tetraalkylammoniumcarboxylate, wie z. B. Tetramethylammoniumformiat, Tetramethylammoniumacetat, Tetramethylammoniumpropionat, Tetramethylammoniumbutyrat, Tetramethylammoniumbenzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammonium-propionat, Tetrapropylammoniumbutyrat, Tetrapropylammoniumbenzoat, Tetrabutylammoniumformiat, Tetrabutylammoniumacetat, Tetrabutylammoniumpropionat, Tetrabutylammoniumbutyrat und/oder Tetrabutylammoniumbenzoat.

Zur Vernetzung von Silangruppen geeignete Katalysatoren sind auch quaternäre Ammonium- und Phosphoniumpolyfluoride, wie sie z. B. aus der EP-A 0 798 299, EP-A 0 896 009 und EP-A 0 962 455 als Trimerisierungskatalysatoren für Isocyanatgruppen bekannt sind.

Geeignete Katalysatoren für die Silanvernetzung sind schließlich auch Zink-Amidin-Komplexe, die nach dem Verfahren der WO 2014/016019 durch Umsetzung eines oder mehrerer Zink(lI)biscarboxylate mit Amidinen hergestellt werden können.

Bevorzugte Katalysatoren zur Vernetzung der Silangruppen sind saure Phosphorsäureester, Phosphonsäureester und Sulfonsäuren der genannten Art, die gegebenenfalls in mit Aminen blockierter Form vorliegen können, Amidinbasen sowie Tetraalkylammoniumcarboxylate der genannten Art.

Diese Katalysatoren kommen, falls überhaupt, in Mengen von bis zu 5 Gew.-%, vorzugsweise bis zu 2 Gew.-%, berechnet als Gesamtgewicht an eingesetzten Katalysatoren bezogen auf das Gewicht der als Bindemittel eingesetzten Silangruppen enthaltenden Polyurethane zum Einsatz. In Abhängigkeit von der Art und Menge des eingesetzten Katalysators kann die Aushärtung der aus den erfindungsgemäßen Verfahrensprodukten formulierten Beschichtungsmittel, Dichtstoffe oder Klebstoffe über einen weiten Temperaturbereich, beispielsweise von -20 bis 200°C, vorzugsweise von 0 bis 180°C, besonders bevorzugt von 20 bis 160°C, erfolgen.

Gegebenenfalls können den mit den erfindungsgemäßen Silangruppen enthaltenden Polyurethanen formulierten Beschichtungssystemen, Dicht- oder Klebstoffen auch beliebige weitere hydrolysierbare Silanverbindungen, wie z. B. Tetramethoxysilan, Tetraethoxysilan, Methyltrimethoxysilan, Methyltriethoxysilan, Ethyltriethoxysilan, Isobutyltrimethoxysilan, Isobutyltriethoxysilan, Octyltriethoxysilan, Octyltrimethoxysilan, 3-Aminopropyltrimethoxysilan, 3-Aminopropyltriethoxysilan, (3 -Glycidyloxypropyl)-methyldiethoxysilan, (3-Glycidyloxypropyl)-trimethoxysilan, Phenyltrimethoxysilan, Phenyltriethoxysilan oder silanfunktionelle Coplymerisate der in der US 4 499 150 genannten Art, oder Gemische solcher Silanverbindungen als Reaktionspartner zugesetzt werden.

Den erfindungsgemäßen Silangruppen enthaltenden Polyurethanen können bei der Formulierung von Lacken, Dichtstoffen oder Klebstoffen auch beliebige weitere übliche Hilfs- und Zusatzmittel, wie z. B. UV-Stabilisatoren, Antioxidantien, Wasserfänger, Slipadditive, Entschäumer, Verlaufsmittel, Rheologieadditive, Flammschutzmittel, Füllstoffe und/oder Pigmente, zugesetzt werden. Neben der Verwendung als Alleinbindemittel können die erfindungsgemäßen Verfahrensprodukte, beispielsweise zur Erzielung ganz spezieller Eigenschaften, wie z. B. zur Haftverbesserung, auch üblichen 1K- oder 2K-Polyurethansystemen, beispielsweise als Additiv, zugemischt werden.

Die Applikation der unter Verwendung der erfindungsgemäßen Silangruppen enthaltenden Polyurethane formulierten Beschichtungen, Dichtstoffe oder Klebstoffe kann nach an sich bekannten Methoden erfolgen, beispielsweise durch Spritzen, Streichen, Tauchen, Fluten oder mit Hilfe von Walzen oder Rakeln in einer oder mehrerer Schichten. Als Untergründe kommen dabei beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Ein weiterer Gegenstand der Erfindung sind daher die mit erfindungsgemäßen Silangruppen enthaltenden Polyurethanen beschichteten vorstehend genannten Untergründe.

Die vorliegende Erfindung wird im Folgenden anhand von Beispielen und Vergleichsbeispielen näher erläutert, ohne sie jedoch auf diese einzuschränken.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909:2007-05.

OH-Zahlen wurden titrimetrisch nach DIN 53240-2:2007-11, Säure-Zahlen nach DIN EN ISO 2114:2002-06 bestimmt. Die angegebenen OH-Gehalte wurde aus den analytisch ermittelten OH-Zahlen errechnet. Die angegebenen Werte beziehen sich jeweils auf das Gesamtgewicht der jeweiligen Zusammensetzung inklusive gegebenenfalls mitverwendeter Lösungsmittel.

Sämtliche Viskositätsmessungen erfolgten mit einem Physica MCR 51 Rheometer der Fa. Anton Paar Germany GmbH (DE) nach DIN EN ISO 3219:1994-10 bei einer Scherrate von 250 s⁻¹.

Die Rest-Monomeren Gehalte wurden nach DIN EN ISO 10283:2007-11 gaschromatographisch mit internem Standard gemessen.

Die Anteile an Bisaddukt (aus zwei Molekülen Mercaptosilan und einem Molekül Diisocyanat) in den Alkoxysilan-funktionellen Isocyanaten C) wurden durch Gelpermationschromatographie in Anlehnung an DIN 55672-1:2016-03 (Gelpermeationschromatographie (GPC) - Teil 1: Tetrahydrofuran (THF) als Elutionsmittel) ermittelt, mit der Änderung, dass mit einer Flußrate von 0,6 ml/min statt 1,0 ml/min gearbeitet wurde. Die den Chromatogrammen entnommenen Anteile an Bisaddukt in Flächen-%, welche softwaregestützt ermittelt wurden, wurden näherungsweise jeweils Anteilen in Gew.-% gleichgesetzt und als solche, bezogen auf die Gesamtmenge an Mono- und Bisaddukt, angegeben.

### Ausgangsverbindungen

### Polymere Polyole A)

### Polmeres Polyol A1)

70 %ig in Butylacetat gelöstes Polyacrylatpolyol, hergestellt aus 34,0 % Hydroxyethylmethacrylat, 25,1 % n-Butylacrylat, 40,0 % Styrol und 0,9 % Acrylsäure.

| | |
|---|---|
| OH-Zahl (OH-Gehalt) | 98 mg KOH/g (3,0 %) |
| Äquivalentgewicht: | 572 g/val OH |
| Säurezahl: | 7,5 mg KOH/g |
| Viskosität (23°C): | 3.500 mPas |

### Polmeres Polyol A2)

60 %ig in Solventnaphtha 100 gelöstes Polyacrylatpolyol, hergestellt aus 23,2 % Hydroxypropylmethacrylat, 29,6 % n-Butylacrylat, 44,7 % Styrol, 1,9 % Methylmethacrylat und 0,6 % Acrylsäure.

| | |
|---|---|
| OH-Zahl (OH-Gehalt) | 53 mg KOH/g (1,6 %) |
| Äquivalentgewicht: | 1062 g/val OH |
| Säurezahl: | 4,0 mg KOH/g |
| Viskosität (23°C): | 2.800 mPas |

### Polmeres Polyol A3)

65 %ig in Butylacetat / Xylol (3:1) gelöstes Gemisch aus 63 Gew.-Teilen eines Polyacrylatpolyols, hergestellt aus 32,5 % Hydroxyethylmethacrylat, 24,5 % n-Butylacrylat, 41,9 % Styrol und 1,1 % Acrylsäure, und 37 Gew.-Teilen eines Polyesterpolyols, hergestellt aus 10,0 % Adipinsäure, 20,2 % 2-Ethylhexansäure, 41,2% Trimethylolpropan, 27,0 % Phthalsäureanhydrid, und 1,6 % Maleinsäureanhydrid.

| | |
|---|---|
| OH-Zahl (OH-Gehalt) | 96 mg KOH/g (2,9 %) |
| Äquivalentgewicht: | 585 g/val OH |
| Säurezahl: | 9,0 mg KOH/g |
| Viskosität (23°C): | 3.000 mPas |

### Polmeres Polyol A4)

Lösemittelfreies Polyesterpolyol, hergestellt aus 11,9 % Adipinsäure, 33,7 % Isophthalsäure, 10,7 % Trimethylolpropan, 37,7 % 1,6-Hexandiol und 6,0 % Phthalsäureanhydrid.

| | |
|---|---|
| OH-Zahl (OH-Gehalt) | 143 mg KOH/g (4,3 %) |
| Äquivalentgewicht: | 392 g/val OH |
| Säurezahl: | 1 mg KOH/g |
| Viskosität (23°C): | 3.500 mPas |

### Gegenüber Carboxylgruppen reaktive Verbindungen B)

### Gegenüber Carboxylgruppen reaktive Verbindungen B1)

### Di-(2,6-di-isopropylphenyl)-carbodiimid (Stabaxol^{®} I, Fa. Rheinchemie Rheinau GmbH, Deutschland)

Carbodiimid-Gehalt: 20,4 % (berechnet als -N=C=N-, Molekulargewicht = 40)

### Gegenüber Carboxylgruppen reaktive Verbindungen B2)

2-Ethylhexylglycidylether (Fa. Sigma-Aldrich Chemie GmbH, Deutschland) Epoxid-Gehalt: 23,1 % (berechnet als C₂H₃O, Molekulargewicht = 43)

### Alkoxysilan-funktionelle Isocyanate C)

### Alkoxysilan-funktionelles Isocyanat C1)

1680 g (10 mol) Hexamethylendiisocyanat (HDI) wurden bei einer Temperatur von 80°C unter trockenem Stickstoff mit 196 g (1,0 mol) Mercaptopropyltrimethoxysilan versetzt und nach Zugabe von 0,05 g (25 ppm) 1,4-Diazabicyclo[2.2.2]octan (DABCO) 1 Stunde gerührt, bis ein NCO-Gehalt von 42,5 %, entsprechend einem vollständigen Umsatz, erreicht war. Anschließend wurde das nicht umgesetzte monomere HDI bei einer Temperatur von 140°C und einem Druck von 0,1 mbar im Dünnschichtverdampfer abgetrennt. Man erhielt ein praktisch farbloses, klares Isocyanatosilan mit folgenden Kenndaten:

| | |
|---|---|
| NCO-Gehalt: | 11,2% |
| monomeres HDI: | 0,19 % |
| Viskosität (23°C): | 80 mPas |
| Anteil Bisaddukt: | 4,1 % |
| Si-Gehalt (ber.): | 8,1 % |

### Alkoxysilan-funktionelles Isocyanat C2)

1680 g (10 mol) Hexamethylendiisocyanat (HDI) wurden bei einer Temperatur von 80°C unter trockenem Stickstoff mit 238 g (1,0 mol) Mercaptopropyltriethoxysilan versetzt und nach Zugabe von 0,05 g (25 ppm) 1,4-Diazabicyclo[2.2.2]octan (DABCO) 1 Stunde gerührt, bis ein NCO-Gehalt von 41,6 %, entsprechend einem vollständigen Umsatz, erreicht war. Anschließend wurde das nicht umgesetzte monomere HDI bei einer Temperatur von 140°C und einem Druck von 0,1 mbar im Dünnschichtverdampfer abgetrennt. Man erhielt ein praktisch farbloses, klares Isocyanatosilan mit folgenden Kenndaten:

| | |
|---|---|
| NCO-Gehalt: | 9,8 % |
| monomeres HDI: | 0,15 % |
| Viskosität (23°C): | 92 mPas |
| Anteil Bisaddukt: | 7,8 % |
| Si-Gehalt (ber.): | 7,6 % |

### Alkoxysilan-funktionelles Isocyanat C3)

2220 g (10 mol) Isophorondiisocyanat (IPDI) wurden bei einer Temperatur von 80°C unter trockenem Stickstoff mit 196 g (1,0 mol) Mercaptopropyltrimethoxysilan versetzt und nach Zugabe von von 0,06 g (25 ppm) Dibutylzinn(IV)-dilaurat (DBTL) 3 Stunden gerührt, bis ein NCO-Gehalt von 33,0 %, entsprechend einem vollständigen Umsatz, erreicht war. Anschließend wurde das nicht umgesetzte monomere IPDI bei einer Temperatur von 150°C und einem Druck von 0,1 mbar im Dünnschichtverdampfer abgetrennt. Man erhielt ein praktisch farbloses, klares Isocyanatosilan mit folgenden Kenndaten:

| | |
|---|---|
| NCO-Gehalt: | 9,7 % |
| monomeres IPDI: | 0,23 % |
| Viskosität (23°C): | 5.400 mPas |
| Anteil Bisaddukt: | 4,8 % |
| Si-Gehalt (ber.): | 6,9 % |

### Alkoxysilan-funktionelles Isocyanat C4)

3-Isocyanatopropyltrimethoxysilan (Geniosil^{®} GF 40, Fa. Wacker Chemie AG, Deutschland)

| | |
|---|---|
| NCO-Gehalt: | 20,1 % (theo: 20,4 %) |
| Si-Gehalt (ber.): | 13,6 % |

### Beispiel 1 (nicht erfindungsgemäß)

375,0 g (1,0 val) des Alkoxysilan-funktionellen Isocyanats C1) wurden gemeinsam mit 345 g Butylacetat, 9,5 g Triethylorthoformiat als Wasserfänger und 0,06 g Dibutylzinn(IV)-dilaurat (DBTL) als Katalysator unter trockenem Stickstoff bei 80°C vorgelegt, innerhalb von 30 Minuten mit 572 g (1,0 val) des polymeren Polyols A1) versetzt und nach beendeter Zugabe weiter bei dieser Temperatur gerührt. Nach einer Reaktionszeit von ca. 2 Stunden war ein deutlicher Viskositätsanstieg des Reaktionsansatzes zu beobachten. Nach 2,5 Stunden war das Reaktionsgemisch vollständig geliert und nicht mehr rührbar.

### Beispiel 2 (erfindungsgemäß)

572 g (1,0 val) des polymeren Polyols A1) wurden mit 200 g Butylacetat verdünnt und nach Zugabe von 15 g Stabaxol^{®} I, entsprechend einem Äquivalentverhältnis von Carboxylgruppen zu gegenüber Carboxylgruppen reaktiven Gruppen von 1 : 1, unter trockenem Stickstoff 3 Stunden bei 50°C gerührt.

Anschließend wurde die so erhaltene Mischung innerhalb von 30 Minuten zu einer unter trockenem Stickstoff bei 80°C vorgelegten Lösung von 375,0 g (1,0 val) des Alkoxysilan-funktionellen Isocyanats C1), 9,5 g Triethylorthoformiat und 0,06 g DBTL in 145 g Butylacetat, entsprechend einem Äquivalentverhältnis von Isocyanatgruppen zu Hydroxylgruppen von 1 : 1 zugetropft. Nach beendeter Zugabe wurde weiter bei 80°C gerührt, bis nach ca. 8 Stunden IR-spektroskopisch kein Isocyanat mehr nachweisbar war. Nach Abkühlen auf Raumtemperatur lag ein erfindungsgemäßes Silangruppen enthaltendes Polyurethan in Form einer farblosen Lösung vor.

| | |
|---|---|
| Festkörpergehalt: | 60 % |
| Viskosität (23°C): | 1450 mPas |
| Si-Gehalt (ber.): | 3,8 % (bezogen auf Festkörper) |

### Beispiel 3 (nicht erfindungsgemäß)

375,0 g (1,0 val) des Alkoxysilan-funktionellen Isocyanats C1) wurden gemeinsam mit 250 g Butylacetat, 10 g Triethylorthoformiat als Wasserfänger und 0,08 g DBTL als Katalysator unter trockenem Stickstoff bei 80°C vorgelegt, innerhalb von 30 min mit 1062 g (1,0 val) des polymeren Polyols A2) versetzt und nach beendeter Zugabe weiter bei dieser Temperatur gerührt. Nach einer Reaktionszeit von 1,5 Stunden war ein deutlicher Viskositätsanstieg des Reaktionsansatzes zu beobachten. Nach 2 Stunden war das Reaktionsgemisch vollständig geliert und nicht mehr rührbar.

### Beispiel 4 (erfindungsgemäß)

1062 g (1,0 val) des polymeren Polyols A2) wurden mit 200 g Butylacetat verdünnt und nach Zugabe von 14,8 g Stabaxol^{®} I, entsprechend einem Äquivalentverhältnis von Carboxylgruppen zu gegenüber Carboxylgruppen reaktiven Gruppen von 1 : 1, unter trockenem Stickstoff 3 Stunden bei 50°C gerührt.

Anschließend wurde das so erhaltene Gemisch innerhalb von 30 Minuten zu einer unter trockenem Stickstoff bei 80°C vorgelegten Lösung von 375,0 g (1,0 val) des Alkoxysilan-funktionellen Isocyanats C1), 10 g Triethylorthoformiat und 0,06 g DBTL in 60 g Butylacetat, entsprechend einem Äquivalentverhältnis von Isocyanatgruppen zu Hydroxylgruppen von 1 : 1 zugetropft. Nach beendeter Zugabe wurde weiter bei 80°C gerührt, bis nach ca. 8 Stunden IR-spektroskopisch kein Isocyanat mehr nachweisbar war. Nach Abkühlen auf Raumtemperatur lag ein erfindungsgemäßes Silangruppen enthaltendes Polyurethan in Form einer farblosen Lösung vor.

| | |
|---|---|
| Festkörpergehalt: | 60 % |
| Viskosität (23°C): | 3250 mPas |
| Si-Gehalt (ber.): | 2,9 % (bezogen auf Festkörper) |

### Beispiel 5 (nicht erfindungsgemäß)

209,0 g (1,0 val) 3-Isocyanatopropyltrimethoxysilan (Alkoxysilan-funktionelles Isocyanats C4)) wurden gemeinsam mit 238 g Butylacetat, 6,0 g Triethylorthoformiat als Wasserfänger und 0,05 g Dibutylzinn(IV)-dilaurat (DBTL) als Katalysator unter trockenem Stickstoff bei 80°C vorgelegt, innerhalb von 30 Minuten mit 572 g (1,0 val) des polymeren Polyols A1) versetzt und nach beendeter Zugabe weiter bei dieser Temperatur gerührt. Nach einer Reaktionszeit von ca. 1 Stunde war ein deutlicher Viskositätsanstieg des Reaktionsansatzes zu beobachten. Nach 2 Stunden war das Reaktionsgemisch vollständig geliert und nicht mehr rührbar.

### Beispiel 6 (erfindungsgemäß)

572 g (1,0 val) des polymeren Polyols A1) wurden mit 200 g Butylacetat verdünnt und nach Zugabe von 15 g Stabaxol^{®} I, entsprechend einem Äquivalentverhältnis von Carboxylgruppen zu gegenüber Carboxylgruppen reaktiven Gruppen von 1 : 1, unter trockenem Stickstoff 3 Stunden bei 50°C gerührt.

Anschließend wurde die so erhaltene Mischung innerhalb von 30 Minuten zu einer unter trockenem Stickstoff bei 80°C vorgelegten Lösung von 209,0 g (1,0 val) 3-Isocyanatopropyltrimethoxysilan (Alkoxysilan-funktionelles Isocyanat C4)), 6,0 g Triethylorthoformiat und 0,05 g DBTL in 48 g Butylacetat, entsprechend einem Äquivalentverhältnis von Isocyanatgruppen zu Hydroxylgruppen von 1 : 1 zugetropft. Nach beendeter Zugabe wurde weiter bei 80°C gerührt, bis nach ca. 6 Stunden IR-spektroskopisch kein Isocyanat mehr nachweisbar war. Nach Abkühlen auf Raumtemperatur lag ein erfindungsgemäßes Silangruppen enthaltendes Polyurethan in Form einer farblosen Lösung vor.

| | |
|---|---|
| Festkörpergehalt: | 60 % |
| Viskosität (23°C): | 1320 mPas |
| Si-Gehalt (ber.): | 4,5 % (bezogen auf Festkörper) |

Der Vergleich der nicht erfindungsgemäßen Beispiele 1, 3 und 5 mit den erfindungsgemäßen Beispielen 2, 4 und 6 zeigt, dass sich aus polymeren Polyacrylatpolyolen nach Umsetzung der im Polymer enthaltenen Carboxylgruppen mit einer gegenüber Carboxylgruppen reaktiven Verbindung völlig problemlos vollständig silanfunktionalisierte Polyurethane herstellen lassen (Beispiele 2, 4 und 6), während Versuche, die gleichen Polyacrylatpolyole ohne diese Vorreaktion mit Silan-funktionellen Isocyanaten umzusetzen (Beispiele 1, 3 und 5), zum Gelieren des Reaktionsansatzes führen.

### Beispiel 7 (erfindungsgemäß)

585 g (1,0 val) des polymeren Polyols A3) wurden mit 200 g Butylacetat verdünnt und nach Zugabe von 18,4 g Stabaxol^{®} I, entsprechend einem Äquivalentverhältnis von Carboxylgruppen zu gegenüber Carboxylgruppen reaktiven Gruppen von 1 : 1, unter trockenem Stickstoff 3 Stunden bei 50°C gerührt.

Anschließend wurde das so erhaltene Gemisch innerhalb von 30 Minuten zu einer unter trockenem Stickstoff bei 80°C vorgelegten Lösung von 375,0 g (1,0 val) des Alkoxysilan-funktionellen Isocyanats C1), 8 g Triethylorthoformiat und 0,06 g DBTL in 115 g Butylacetat, entsprechend einem Äquivalentverhältnis von Isocyanatgruppen zu Hydroxylgruppen von 1 : 1 zugetropft. Nach beendeter Zugabe wurde weiter bei 80°C gerührt, bis nach ca. 8 Stunden IR-spektroskopisch kein Isocyanat mehr nachweisbar war. Nach Abkühlen auf Raumtemperatur lag ein erfindungsgemäßes Silangruppen enthaltendes Polyurethan in Form einer farblosen Lösung vor.

| | |
|---|---|
| Festkörpergehalt: | 60 % |
| Viskosität (23°C): | 2900 mPas |
| Si-Gehalt (ber.): | 3,9 % (bezogen auf Festkörper) |

### Beispiel 8 (erfindungsgemäß)

392 g (1,0 val) des polymeren Polyols A4) wurden mit 350 g Butylacetat verdünnt und nach Zugabe von 1,4 g Stabaxol^{®} I, entsprechend einem Äquivalentverhältnis von Carboxylgruppen zu gegenüber Carboxylgruppen reaktiven Gruppen von 1 : 1, unter trockenem Stickstoff 3 Stunden bei 50°C gerührt.

Anschließend wurde das so erhaltene Gemisch innerhalb von 30 Minuten zu einer unter trockenem Stickstoff bei 80°C vorgelegten Lösung von 375,0 g (1,0 val) des Alkoxysilan-funktionellen Isocyanats C1), 8 g Triethylorthoformiat und 0,06 g DBTL in 162 g 1-Methoxy-2-propylacetat, entsprechend einem Äquivalentverhältnis von Isocyanatgruppen zu Hydroxylgruppen von 1 : 1 zugetropft. Nach beendeter Zugabe wurde weiter bei 80°C gerührt, bis nach ca. 8 Stunden IR-spektroskopisch kein Isocyanat mehr nachweisbar war. Nach Abkühlen auf Raumtemperatur lag ein erfindungsgemäßes Silangruppen enthaltendes Polyurethan in Form einer farblosen Lösung vor.

| | |
|---|---|
| Festkörpergehalt: | 60 % |
| Viskosität (23°C): | 2450 mPas |
| Si-Gehalt (ber.): | 3,9 % (bezogen auf Festkörper) |

### Beispiel 9 (erfindungsgemäß)

572 g (1,0 val) des polymeren Polyols A1) wurden mit 200 g Butylacetat verdünnt und nach Zugabe von 15 g Stabaxol^{®} I, entsprechend einem Äquivalentverhältnis von Carboxylgruppen zu gegenüber Carboxylgruppen reaktiven Gruppen von 1 : 1, unter trockenem Stickstoff 3 Stunden bei 50°C gerührt.

Anschließend wurde die so erhaltene Mischung innerhalb von 30 Minuten zu einer unter trockenem Stickstoff bei 80°C vorgelegten Lösung von 428,5 g (1,0 val) des Alkoxysilan-funktionellen Isocyanats C2), 10,0 g Triethylorthoformiat und 0,06 g DBTL in 190 g Butylacetat, entsprechend einem Äquivalentverhältnis von Isocyanatgruppen zu Hydroxylgruppen von 1 : 1 zugetropft. Nach beendeter Zugabe wurde weiter bei 80°C gerührt, bis nach ca. 8 Stunden IR-spektroskopisch kein Isocyanat mehr nachweisbar war. Nach Abkühlen auf Raumtemperatur lag ein erfindungsgemäßes Silangruppen enthaltendes Polyurethan in Form einer farblosen Lösung vor.

| | |
|---|---|
| Festkörpergehalt: | 60 % |
| Viskosität (23°C): | 1450 mPas |
| Si-Gehalt (ber.): | 3,9 % (bezogen auf Festkörper) |

### Beispiel 10 (erfindungsgemäß)

572 g (1,0 val) des polymeren Polyols A1) wurden mit 200 g Butylacetat verdünnt und nach Zugabe von 15 g Stabaxol^{®} I, entsprechend einem Äquivalentverhältnis von Carboxylgruppen zu gegenüber Carboxylgruppen reaktiven Gruppen von 1 : 1, unter trockenem Stickstoff 3 Stunden bei 50°C gerührt.

Anschließend wurde die so erhaltene Mischung innerhalb von 30 Minuten zu einer unter trockenem Stickstoff bei 80°C vorgelegten Lösung von 262,5 g (0,7 val) des Alkoxysilan-funktionellen Isocyanats C1), 129,9 g (0,3 val) des Alkoxysilan-funktionellen Isocyanats C3), 12,0 g Triethylorthoformiat und 0,06 g DBTL in 175 g Butylacetat, entsprechend einem Äquivalentverhältnis von Isocyanatgruppen zu Hydroxylgruppen von 1 : 1 zugetropft. Nach beendeter Zugabe wurde weiter bei 80°C gerührt, bis nach ca. 8 Stunden IR-spektroskopisch kein Isocyanat mehr nachweisbar war. Nach Abkühlen auf Raumtemperatur lag ein erfindungsgemäßes Silangruppen enthaltendes Polyurethan in Form einer farblosen Lösung vor.

| | |
|---|---|
| Festkörpergehalt: | 60 % |
| Viskosität (23°C): | 1840 mPas |
| Si-Gehalt (ber.): | 3,7 % (bezogen auf Festkörper) |

### Beispiel 11 (erfindungsgemäß)

572 g (1,0 val) des polymeren Polyols A1) wurden mit 200 g Butylacetat verdünnt und nach Zugabe von 13,5 g (0,077 val) 2-Ethylhexylglycidylether entsprechend einem Äquivalentverhältnis von Carboxylgruppen zu gegenüber Carboxylgruppen reaktiven Gruppen von 1 : 1, unter trockenem Stickstoff 3 Stunden bei 50°C gerührt.

Anschließend wurde die so erhaltene Mischung innerhalb von 30 Minuten zu einer unter trockenem Stickstoff bei 80°C vorgelegten Lösung von 403,9 g (1,077 val) des Alkoxysilan-funktionellen Isocyanats C1), 9,5 g Triethylorthoformiat und 0,06 g DBTL in 165 g Butylacetat, entsprechend einem Äquivalentverhältnis von Isocyanatgruppen zu Hydroxylgruppen von 1 : 1 (unter Berücksichtigung der bei der Carboxyl/Epoxid-Reaktion entstehenden zusätzlichen Hydroxylgruppen) zugetropft. Nach beendeter Zugabe wurde weiter bei 80°C gerührt, bis nach ca. 8 Stunden IR-spektroskopisch kein Isocyanat mehr nachweisbar war. Nach Abkühlen auf Raumtemperatur lag ein erfindungsgemäßes Silangruppen enthaltendes Polyurethan in Form einer farblosen Lösung vor.

| | |
|---|---|
| Festkörpergehalt: | 60 % |
| Viskosität (23°C): | 1370 mPas |
| Si-Gehalt (ber.): | 4,0 % (bezogen auf Festkörper) |

## Patentansprüche

1. Verfahren zur Herstellung von Silangruppen enthaltenden Polyurethanen, umfassend die Umsetzung von
A) mindestens einem polymeren Polyol mit einer nach DIN EN ISO 2114:2002-06 bestimmten Säurezahl von 0,01 bis 30,0 mg KOH/g, bezogen auf den Feststoffgehalt, mit
B) mindestens einer mindestens eine gegenüber Carboxylgruppen reaktive Gruppe aufweisenden Verbindung, die mindestens eine Epoxidgruppe, Carbodiimidgruppe und/oder 2-Oxazolingruppe enthält,
unter Erhalt eines Reaktionsproduktes und die Umsetzung des Reaktionsproduktes mit
C) mindestens einem Alkoxysilan-funktionellen Isocyanat.

2. Verfahren gemäß Anspruch 1, **dadurch gekennzeichnet, dass** das polymere Polyol A) ein mindestens difunktionelles polymeres Polyol ist, das ein zahlenmittleres Molekulargewicht Mₙ von 270 bis 22000 g/mol aufweist.

3. Verfahren gemäß Anspruch 1 oder 2, **dadurch gekennzeichnet, dass** das polymere Polyol A) ein Polyesterpolyol, Polycarbonatpolyol und/oder Polyacrylatpolyol ist.

4. Verfahren gemäß einem der Ansprüche 1 bis 3, **dadurch gekennzeichnet, dass** die mindestens eine gegenüber Carboxylgruppen reaktive Gruppe aufweisende Verbindung B) mindestens ein Mono- oder Polycarbodiimid auf Basis von 2,6-Diisopropylphenylisocyanat und/oder 1,3,5-Triisopropylbenzol-2,4-diisocyanat ist und besonders bevorzugt Di-(2,6-diisopropylphenyl)-carbodiimid ist.

5. Verfahren gemäß einem der Ansprüche 1 bis 4, **dadurch gekennzeichnet, dass** die Umsetzung des polymeren Polyols A) mit der mindestens eine gegenüber Carboxylgruppen reaktive Gruppe aufweisenden Verbindung B) unter Einhaltung eines Äquivalentverhältnisses von Carboxylgruppen zu gegenüber Carboxylgruppen reaktiven Gruppen von 1,5 : 1 bis 1 : 5, bevorzugt von 1,2 : 1 bis 1 : 2 und besonders bevorzugt von 1,1 : 1 bis 1 : 1,1 erfolgt.

6. Verfahren gemäß einem der Ansprüche 1 bis 5, **dadurch gekennzeichnet, dass** als Alkoxysilan-funktionelles Isocyanat C) mindestens eine Verbindung zum Einsatz kommt, die genau eine Isocyanatgruppe und genau eine Silangruppe mit mindestens einem Alkoxysubstituenten aufweist.

7. Verfahren gemäß einem der Ansprüche 1 bis 6, **dadurch gekennzeichnet, dass** als Alkoxysilan-funktionelles Isocyanat C) mindestens eine Verbindung der allgemeinen Formel (I) 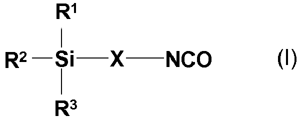 zum Einsatz kommt,
in welcher
R¹, R² und R³ unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 18 Kohlenstoffatomen, die gegebenenfalls bis zu 3 Heteroatome aus der Reihe Sauerstoff, Schwefel, Stickstoff enthalten können, stehen, mit der Maßgabe, dass mindestens einer der Reste R¹, R² oder R³ über ein Sauerstoffatom mit dem Siliziumatom verbunden ist, und
X für einen linearen oder verzweigten organischen Rest mit bis zu 6 Kohlenstoffatomen steht.

8. Verfahren gemäß Anspruch 7, **dadurch gekennzeichnet, dass** in der Formel (I)
R¹, R² und R³ unabhängig voneinander für gleiche oder verschiedene Alkylreste mit bis zu 6 Kohlenstoffatomen und/oder Alkoxyreste mit bis zu 6 Kohlenstoffatomen, die bis zu 3 Sauerstoffatome enthalten können, stehen, mit der Maßgabe, dass mindestens einer der Reste R¹, R² oder R³ für einen Alkoxyrest steht, und
X für einen linearen oder verzweigten organischen Rest mit 1 bis 4 Kohlenstoffatomen steht.

9. Verfahren gemäß einem der Ansprüche 1 bis 6, **dadurch gekennzeichnet, dass** als Alkoxysilan-funktionelles Isocyanat C) mindestens eine Verbindung der allgemeinen Formel (II) zum Einsatz kommt 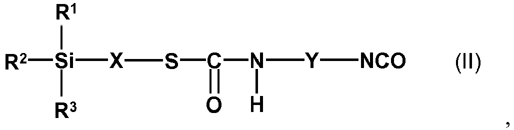 die im Gemisch mit untergeordneten Mengen silanfunktioneller Verbindungen der allgemeinen Formel (III) 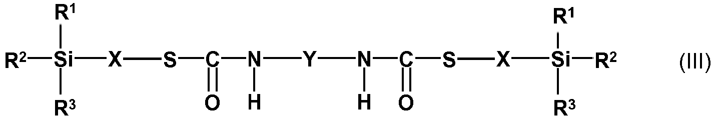 vorliegt, wobei in den Formeln (II) und (III)
R¹, R², R³ und X die in Anspruch 7 für Formel (I), bevorzugt die in Anspruch 8 für Formel (I) angegebene Bedeutung haben und
Y für einen linearen oder verzweigten, aliphatischen oder cycloaliphatischen Rest mit 4 bis 18 Kohlenstoffatomen oder einen gegebenenfalls substituierten aromatischen oder araliphatischen Rest mit 6 bis 18 Kohlenstoffatomen, steht und
wobei die Verbindungen der allgemeinen Formel (III) einen Anteil von 2 bis 15 Gew.-% an der Gesamtmasse der Verbindungen der allgemeinen Formeln (II) und (III) ausmachen.

10. Verfahren gemäß Anspruch 9, **dadurch gekennzeichnet, dass** als Alkoxysilan-funktionelles Isocyanat C) mindestens ein Umsetzungsprodukt von 3-Mercaptopropyltrimethoxysilan und/oder 3-Mercaptopropyltriethoxysilan mit 1,5-Diisocyanatopentan, 1,6-Diisocyanatohexan, 1-Isocyanato-3,3,5-trimethyl-5-isocyanatomethylcyclohexan, 2,4'- und/oder 4,4'-Diisocyanatodicyclohexylmethan oder beliebigen Gemischen dieser Diisocyanate zum Einsatz kommt.

11. Verfahren gemäß einem der Ansprüche 1 bis 6, **dadurch gekennzeichnet, dass** als Alkoxysilan-funktionelles Isocyanat C) mindestens eine Verbindung der allgemeinen Formel (IV) zum Einsatz kommt 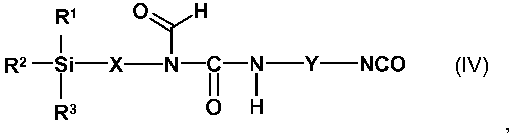 die im Gemisch mit untergeordneten Mengen silanfunktioneller Verbindungen der allgemeinen Formel (V) 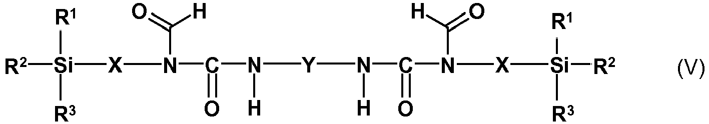 vorliegen, wobei in den Formeln (IV) und (V)
R¹, R², R³ und X die in Anspruch 7 für Formel (I), bevorzugt die in Anspruch 8 für Formel (I) angegebene Bedeutung haben und
Y die für die Formeln (II) und (III) in Anspruch 9 angegebene Bedeutung hat und
wobei die Verbindungen der allgemeinen Formel (V) einen Anteil von 2 bis 15 Gew.-% an der Gesamtmasse der Verbindungen der allgemeinen Formeln (IV) und (V) ausmachen.

12. Verfahren gemäß einem der Ansprüche 1 bis 11, **dadurch gekennzeichnet, dass** die Umsetzung des Reaktionsproduktes mit dem Alkoxysilan-funktionellen Isocyanat C) unter Einhaltung eines Äquivalentverhältnisses von Isocyanatgruppen zu Hydroxylgruppen von 0,7 : 1 bis 1,5 : 1, bevorzugt von 0,8 : 1 bis 1,2 : 1, besonders bevorzugt von 0,9 : 1 bis 1,1 : 1 und ganz besonders bevorzugt von 1 : 1 bis 1,05 : 1 erfolgt.

13. Silangruppen enthaltende Polyurethane, hergestellt oder herstellbar nach einem Verfahren gemäß einem der Ansprüche 1 bis 12.

14. Verwendung der Silangruppen enthaltenden Polyurethane gemäß Anspruch 13 zur Herstellung von vernetzbaren Bindemitteln, bevorzugt zur Herstellung von vernetzbaren Lack-, Dichtstoff- oder Klebstoffrohstoffen.

15. Vernetzbare Bindemittel, enthaltend Silangruppen enthaltenden Polyurethane gemäß Anspruch 13.

## Claims

1. Process for preparing silane-containing polyurethanes comprising the reaction of
A) at least one polymeric polyol having an acid number determined according to DIN EN ISO 2114:2002-06 of 0.01 to 30.0 mg KOH/g based on the solids content with
B) at least one compound which has at least one carboxyl-reactive group and contains at least one epoxy group, carbodiimide group and/or 2-oxazoline group
to obtain a reaction product and the reaction of the reaction product with
C) at least one alkoxysilane-functional isocyanate.

2. Process according to Claim 1, **characterized in that** the polymeric polyol A) is an at least difunctional polymeric polyol having a number-average molecular weight Mₙ of 270 to 22000 g/mol.

3. Process according to Claim 1 or 2, **characterized in that** the polymeric polyol A) is a polyester polyol, polycarbonate polyol and/or polyacrylate polyol.

4. Process according to any of Claims 1 to 3, **characterized in that** the compound B) having at least one carboxyl-reactive group is at least one mono- or polycarbodiimide based on 2,6-diisopropylphenyl isocyanate and/or 1.3.5-triisopropylbenzene-2.4-diisocyanate and is particularly preferably di(2,6-diisopropylphenyl)carbodiimide.

5. Process according to any of Claims 1 to 4, **characterized in that** the reaction of the polymeric polyol A) with the compound B) having at least one carboxyl-reactive group is carried out while maintaining an equivalent ratio of carboxyl groups to carboxyl-reactive groups of 1.5 : 1 to 1 : 5, preferably of 1.2 : 1 to 1 : 2 and particularly preferably of 1.1 : 1 to 1 : 1.1.

6. Process according to any of Claims 1 to 5, **characterized in that** the employed alkoxysilane-functional isocyanate C) is at least one compound which comprises precisely one isocyanate group and precisely one silane group having at least one alkoxy substituent.

7. Process according to any of Claims 1 to 6, **characterized in that** the employed alkoxysilane-functional isocyanate C) is at least one compound of general formula (I) 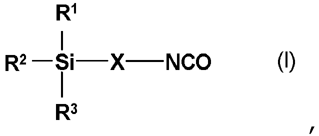 in which
R¹, R² and R³ independently of one another represent identical or different saturated or unsaturated linear or branched, aliphatic or cycloaliphatic or optionally substituted aromatic or araliphatic radicals having up to 18 carbon atoms which may optionally contain up to 3 heteroatoms from the group of oxygen, sulfur, nitrogen with the proviso that at least one of the radicals R¹, R² or R³ is connected to the silicon atom via an oxygen atom and
X represents a linear or branched organic radical having up to 6 carbon atoms.

8. Process according to Claim 7, **characterized in that** in formula (I)
R¹, R² and R³ independently of one another represent identical or different alkyl radicals having up to 6 carbon atoms and/or alkoxy radicals having up to 6 carbon atoms which may contain up to 3 oxygen atoms with the proviso that at least one of the radicals R¹, R² or R³ is an alkoxy radical and
X represents a linear or branched organic radical having 1 to 4 carbon atoms.

9. Process according to any of Claims 1 to 6, **characterized in that** the employed alkoxysilane-functional isocyanate C) is at least one compound of general formula (II) 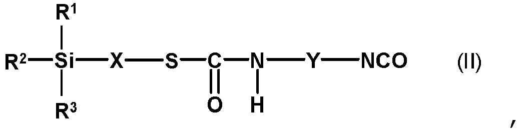 which is present in admixture with subordinate amounts of silane-functional compounds of general formula (III) 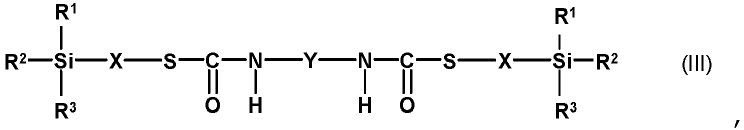 wherein in formulae (II) and (III)
R¹, R², R³ and X are as defined in Claim 7 for formula (I), preferably as defined in Claim 8 for formula (I), and
Y represents a linear or branched, aliphatic or cycloaliphatic radical having 4 to 18 carbon atoms or an optionally substituted aromatic or araliphatic radical having 6 to 18 carbon atoms and
wherein the compounds of general formula (III) account for a proportion of 2% to 15% by weight of the total mass of the compounds of general formulae (II) and (III) .

10. Process according to Claim 9, **characterized in that** the employed alkoxysilane-functional isocyanate C) is at least one reaction product of 3-mercaptopropyltrimethoxysilane and/or 3-mercaptopropyltriethoxysilane with 1,5-diisocyanatopentane, 1,6-diisocyanatohexane, 1-isocyanato-3,3,5-trimethyl-5-isocyanatomethylcyclohexane, 2,4'- and/or 4,4'-diisocyanatodicyclohexylmethane or any desired mixtures of these diisocyanates.

11. Process according to any of Claims 1 to 6, **characterized in that** the employed alkoxysilane-functional isocyanate C) is at least one compound of general formula (IV) 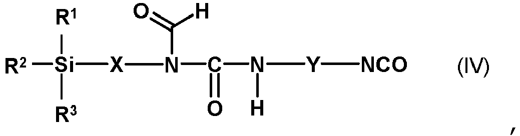 which are present in admixture with subordinate amounts of silane-functional compounds of general formula (V) 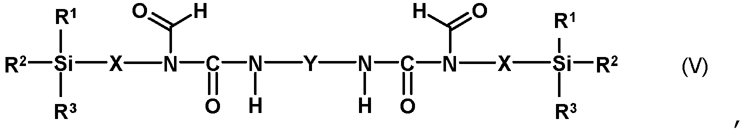 wherein in formulae (IV) and (V)
R¹, R², R³ and X are as defined in Claim 7 for formula (I), preferably as defined in Claim 8 for formula (I), and
Y is as defined for formulae (II) and (III) in Claim 9 and
wherein the compounds of general formula (V) account for a proportion of 2% to 15% by weight of the total mass of the compounds of general formulae (IV) and (V) .

12. Process according to any of Claims 1 to 11, **characterized in that** the reaction of the reaction product with the alkoxysilane-functional isocyanate C) is carried out while maintaining an equivalent ratio of isocyanate groups to hydroxyl groups of 0.7 : 1 to 1.5 : 1, preferably of 0.8 : 1 to 1.2 : 1, particularly preferably of 0.9 : 1 to 1.1 : 1 and very particularly preferably of 1 : 1 to 1.05 : 1.

13. Silane-containing polyurethanes prepared or preparable by a process according to any of Claims 1 to 12.

14. Use of the silane-containing polyurethanes according to Claim 13 for preparing crosslinkable binders, preferably for preparing crosslinkable raw materials for lacquers, sealants or adhesives.

15. Crosslinkable binders containing silane-containing polyurethanes according to Claim 13.

## Revendications

1. Procédé pour la préparation de polyuréthanes contenant des groupes silane, comprenant la transformation de
A) au moins un polyol polymérique doté d'un indice d'acide déterminé selon la norme DIN EN ISO 2114:2002-06 de 0,01 à 30,0 mg de KOH/g, par rapport à la teneur en solides, avec
B) au moins un composé présentant au moins un groupe réactif envers des groupes carboxyle, qui contient au moins un groupe époxyde, un groupe carbodiimide et/ou un groupe 2-oxazoline,
avec obtention d'un produit de réaction et la transformation du produit de réaction avec
C) au moins un isocyanate fonctionnalisé par alcoxysilane.

2. Procédé selon la revendication 1, **caractérisé en ce que** le polyol polymérique A) est un polyol polymérique au moins difonctionnel qui présente un poids moléculaire moyen en nombre Mₙ de 270 à 22 000 g/mole.

3. Procédé selon la revendication 1 ou 2, **caractérisé en ce que** le polyol polymérique A) est un polyesterpolyol, un polycarbonatepolyol et/ou un polyacrylatepolyol.

4. Procédé selon l'une quelconque des revendications 1 à 3, **caractérisé en ce que** le composé B) présentant au moins un groupe réactif envers des groupes carboxyle est au moins un monocarbodiimide ou polycarbodiimide à base d'isocyanate de 2,6-diisopropylphényle et/ou de 2,4-diisocyanate de 1,3,5-triisopropylbenzène et est particulièrement préférablement le di-(2,6-diisopropylphényl)-carbodiimide.

5. Procédé selon l'une quelconque des revendications 1 à 4, **caractérisé en ce que** la transformation du polyol polymérique A) avec le composé B) présentant au moins un groupe réactif envers des groupes carboxyle est réalisée en respectant un rapport d'équivalents de groupes carboxyle sur groupes réactifs envers des groupes carboxyle de 1,5 : 1 à 1 : 5, préférablement de 1,2 : 1 à 1 : 2 et particulièrement préférablement de 1,1 : 1 à 1 : 1,1.

6. Procédé selon l'une quelconque des revendications 1 à 5, **caractérisé en ce qu'**en tant qu'isocyanate C) fonctionnalisé par alcoxysilane, on utilise au moins un composé qui présente exactement un groupe isocyanate et exactement un groupe silane comportant au moins un substituant alcoxy.

7. Procédé selon l'une quelconque des revendications 1 à 6, **caractérisé en ce qu'**en tant qu'isocyanate C) fonctionnalisé par alcoxysilane, on utilise au moins un composé de formule générale (I) 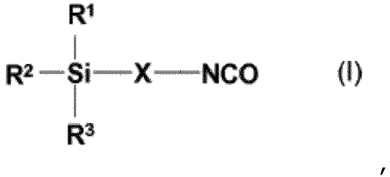 dans laquelle
R¹, R², R³ représentent, indépendamment les uns des autres, des radicaux identiques ou différents, aliphatiques ou cycloaliphatiques, saturés ou insaturés, linéaires ou ramifiés, ou aromatiques ou araliphatiques éventuellement substitués comportant jusqu'à 18 atomes de carbone, qui peuvent éventuellement contenir jusqu'à 3 hétéroatomes de la série oxygène, soufre, azote, à la condition qu'au moins l'un des radicaux R¹, R² ou R³ soit relié avec l'atome de silicium par le biais d'un atome d'oxygène, et
X représente un radical organique linéaire ou ramifié comportant jusqu'à 6 atomes de carbone.

8. Procédé selon la revendication 7, **caractérisé en ce que** dans la formule (I)
R¹, R², R³ représentent, indépendamment les uns des autres, des radicaux alkyle identiques ou différents comportant jusqu'à 6 atomes de carbone et/ou des radicaux alcoxy comportant jusqu'à 6 atomes de carbone, qui peuvent contenir jusqu'à 3 atomes d'oxygène, à la condition qu'au moins l'un des radicaux R¹, R² ou R³ représente un radical alcoxy, et
X représente un radical organique linéaire ou ramifié comportant 1 à 4 atomes de carbone.

9. Procédé selon l'une quelconque des revendications 1 à 6, **caractérisé en ce qu'**en tant qu'isocyanate C) fonctionnalisé par alcoxysilane, on utilise au moins un composé de formule générale (II) 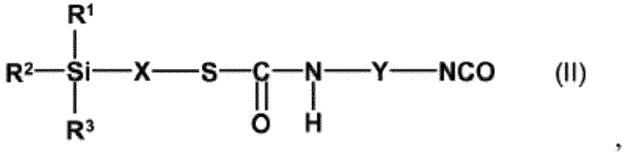 qui est présent en mélange avec des quantités minoritaires de composés fonctionnalisés par silane de formule générale (III) 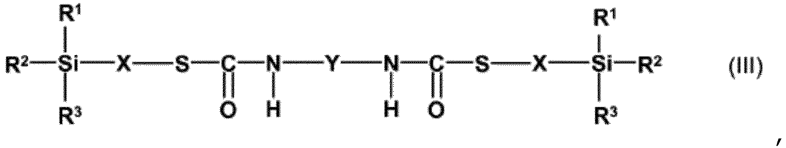 dans les formules (II) et (III)
R¹, R², R³ et X possèdent la signification indiquée dans la revendication 7 pour la formule (I), préférablement la signification indiquée dans la revendication 8 pour la formule (I) et
Y représente un radical aliphatique ou cycloaliphatique, linéaire ou ramifié comportant 4 à 18 atomes de carbone ou un radical aromatique ou araliphatique éventuellement substitué comportant 6 à 18 atomes de carbone, et
les composés de formule générale (III) représentant une proportion de 2 à 15 % en poids par rapport à la masse totale des composés des formules générales (II) et (III).

10. Procédé selon la revendication 9, **caractérisé en ce qu'**en tant qu'isocyanate C) fonctionnalisé par alcoxysilane, on utilise au moins un produit de transformation de 3-mercaptopropyltriméthoxysilane et/ou de 3-mercaptopropyltriéthoxysilane avec le 1,5-diisocyanatopentane, le 1,6-diisocyanatohexane, le 1-isocyanato-3,3,5-triméthyl-5-isocyanatométhylcyclohexane, le 2,4'-diisocyanatodicyclohexylméthane et/ou le 4,4'-diisocyanatodicyclohexylméthane ou des mélanges quelconques de ces diisocyanates.

11. Procédé selon l'une quelconque des revendications 1 à 6, caractérisé ce qu'en tant qu'isocyanate C) fonctionnalisé par alcoxysilane, on utilise au moins un composé de formule générale (IV) 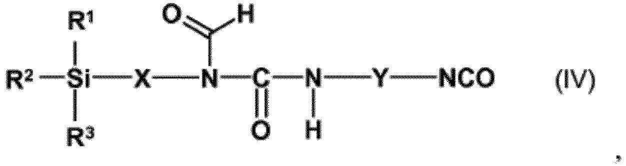 qui est présent en mélange avec des quantités minoritaires de composés fonctionnalisés par silane de formule générale (V) 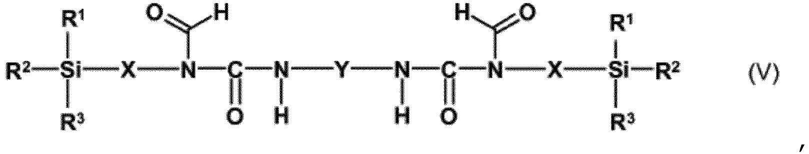 dans les formules (IV) et (V)
R¹, R², R³ et X possèdent la signification indiquée dans la revendication 7 pour la formule (I), préférablement la signification indiquée dans la revendication 8 pour la formule (I) et
Y possède la signification indiquée pour les formules (II) et (III) dans la revendication 9 et
les composés de formule générale (V) représentant une proportion de 2 à 15 % en poids par rapport à la masse totale des composés des formules générales (IV) et (V).

12. Procédé selon l'une quelconque des revendications 1 à 11, **caractérisé en ce que** la transformation du produit de réaction avec l'isocyanate C) fonctionnalisé par alcoxysilane est réalisée en respectant un rapport d'équivalents de groupes isocyanate sur groupes hydroxyle de 0,7 : 1 à 1,5 : 1, préférablement de 0,8 : 1 à 1,2 : 1, particulièrement préférablement de 0,9 : 1 à 1,1 : 1 et tout particulièrement préférablement de 1 : 1 à 1,05 : 1.

13. Polyuréthanes contenant des groupes silane, préparés ou pouvant être préparés par un procédé selon l'une quelconque des revendications 1 à 12.

14. Utilisation des polyuréthanes contenant des groupes silane selon la revendication 13 pour la préparation de liants réticulables, préférablement pour la préparation de matières premières réticulables de peintures, de matières premières réticulables d'agent d'étanchéité ou de matières premières réticulables d'adhésif.

15. Liants réticulables, contenant des polyuréthanes contenant des groupes silane selon la revendication 13.
